# EUROPEAN PATENT SPECIFICATION

(11) **EP 4 107 993 B1**
(45) Date of publication and mention of the grant of the patent: **02.07.2025**
(21) Application number: 20708234.8
(22) Date of filing: 17.02.2020
(51) Int. Cl.: H04W 36/00, H04W 76/15, H04W 76/16, H04W 88/06

(54) **USER EQUIPMENT, FIRST RADIO ACCESS NETWORK NODE AND METHODS PERFORMED THEREIN FOR COMMUNICATION IN A WIRELESS COMMUNICATION NETWORK**
BENUTZERGERÄT, ERSTER FUNKZUGANGSNETZKNOTEN UND DARIN AUSGEFÜHRTE VERFAHREN ZUR KOMMUNIKATION IN EINEM DRAHTLOSEN KOMMUNIKATIONSNETZ
ÉQUIPEMENT UTILISATEUR, PREMIER NOEUD DE RÉSEAU RADIO ET PROCÉDÉS ASSOCIÉS DE COMMUNICATION DANS UN RÉSEAU DE COMMUNICATION SANS FIL

(43) Date of publication of application: 28.12.2022
(73) Proprietor: TELEFONAKTIEBOLAGET LM ERICSSON (PUBL), 164 83 Stockholm (SE)
(72) Inventor: TORABIAN ESFAHANI, Tahmineh, 583 33 Linköping (SE); LUNARDI, Luca, 16145 Genua (IT); MODARRES RAZAVI, Sara, 583 32 Linköping (SE); DREVÖ, Markus, 582 19 Linköping (SE); SHEN, Wei, 582 16 Linköping (SE)
(74) Representative: Ericsson
(86) International application number: PCT/SE2020/050173
(87) International publication number: WO 2021/167501

(56) References cited:
- US-A1- 2019 098 596
- ERICSSON: "Enhanced inter-system mobility in RRC_INACTIVE in spotty NR coverage", vol. RAN WG2, no. Prague, Czech Republic; 20190826 - 20190830, 15 August 2019 (2019-08-15), XP051768461, Retrieved from the Internet <URL:http://www.3gpp.org/ftp/tsg_ran/WG2_RL2/TSGR2_107/Docs/R2-1910690.zip> [retrieved on 20190815]
- "3rd Generation Partnership Project; Technical Specification Group Radio Access Network; NR; Radio Resource Control (RRC) protocol specification (Release 15)", 3GPP STANDARD; TECHNICAL SPECIFICATION; 3GPP TS 38.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.6.0, 29 June 2019 (2019-06-29), pages 1 - 519, XP051754472
- CATT: "Signalling enhnacement for Inactive state", vol. RAN WG2, no. Reno, USA; 20191118 - 20191122, 8 November 2019 (2019-11-08), XP051816598, Retrieved from the Internet <URL:https://ftp.3gpp.org/tsg_ran/WG2_RL2/TSGR2_108/Docs/R2-1914532.zip R2-1914532.docx> [retrieved on 20191108]

## Description

### TECHNICAL FIELD

Embodiments herein relate to a user equipment, a first radio access network (RAN) node and methods performed therein. In particular, embodiments herein relate to handling communication in a wireless communication network.

### BACKGROUND

In a typical wireless communication network, user equipment (UE), also known as wireless communication devices, mobile stations, stations (STA) and/or wireless devices, communicate via a Radio Access Network (RAN) to one or more core networks belonging to different network operators. The RAN covers a geographical area which is divided into areas or cell areas, with each area or cell area being served by a radio network node, e.g., a Wi-Fi access point, a RAN node or a Radio Base Station (RBS), which in some networks may also be called, for example, a NodeB, eNodeB or a gNodeB. The area or cell area is a geographical area where radio coverage is provided by the radio network node. The radio network node communicates over an air interface operating on radio frequencies with the UE within range of the radio network node.

A Universal Mobile Telecommunications System (UMTS) is a third generation telecommunication network, which evolved from the second generation (2G) Global System for Mobile Communications (GSM). The UMTS Terrestrial Radio Access Network (UTRAN) is essentially a RAN using Wideband Code Division Multiple Access (WCDMA) and/or High Speed Packet Access (HSPA) for user equipment. In a forum known as the Third Generation Partnership Project (3GPP), telecommunications suppliers propose and agree upon standards for third generation networks and UTRAN specifically, and investigate enhanced data rate and radio capacity. In some RANs, e.g. as in UMTS, several radio network nodes may be connected, e.g., by landlines or microwave, to a controller node, such as a Radio Network Controller (RNC) or a Base Station Controller (BSC), which supervises and coordinates various activities of the plural radio network nodes connected thereto. The RNCs are typically connected to one or more core networks.

Specifications for the Evolved Packet System (EPS) have been completed within the 3GPP and this work continues in the coming 3GPP releases. The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP Radio Access Technology (RAT) wherein the radio network nodes are directly connected to the EPC core network rather than to RNCs. In general, in E-UTRAN/LTE the functions of an RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs.

With the emerging 5G technologies such as New Radio (NR), the use of a large number of transmit- and receive-antenna elements is of great interest as it makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals coming from a selected direction or directions, while suppressing unwanted signals coming from other directions.

When a UE is located at the border between two RATs, the UE performs a Tracking Area Update (TAU) /Attach/Registration Area Update/Registration request procedure every time it toggles between the two RATs. This is harmful for the communication and negatively impacts both the UE battery life time and the overall network signalling overhead.

3GPP DRAFT; R2-1910690 relates to allowing inter-RAT/inter-system RAN Notification Areas as a way to reduce unnecessary battery consuming signalling and to procedures for how it can be supported also for UEs in LTE/EPC.

3GPP DRAFT; R2-1914532 discloses a solution to support inter-RAT mobility in Inactive mode to allow for fast connection configuration while maintaining UE power saving.

### SUMMARY

An object of embodiments herein is to provide a mechanism that handles communication in a more efficient manner.

According to an aspect the object is achieved by providing a method performed by a UE for handling communication with a first RAN node associated with a first RAT and a second RAN node associated with a second RAT. The UE, the first RAN node and the second RAN node operate in a wireless communication network. The UE is located on or close to a radio coverage border of the first RAT and the second RAT and is in inactive state in the first RAT when being registered through the first RAN node. The UE performs a registration through the second RAN node while retaining a stored inactive context related to the first RAN node, wherein a dual registration timer is used for retaining the stored inactive context, thereby having a dual registration to the first and second RAN nodes. The UE further enters a state in the second RAT while remaining in the inactive state in the first RAT.

According to another aspect the object is achieved by providing a method performed by a first RAN node for handling communication with a UE. The first RAN node is associated with a first RAT and a second RAN node is associated with a second RAT. The UE, the first RAN node and the second RAN node operate in a wireless communication network. The UE is located on or close to a radio coverage border of the first RAT and the second RAT and is in inactive state in the first RAT when being registered through the first RAN node. The first RAN node configures the UE with a dual registration timer for dual registration, that the UE will use to retain an inactive context in the first RAT when registering through the second RAN node. The first network RAN node then retains the inactive context for the UE until the timer is expired.

According to yet another aspect of embodiments herein, the object is achieved by providing a UE for handling communication with a first RAN node associated with a first RAT and a second RAN node associated with a second RAT. The UE, the first RAN node and the second RAN node operate in a wireless communication network. The UE is located on or close to a radio coverage border of the first RAT and the second RAT and is in inactive state in the first RAT when being registered through the first RAN node. The UE is configured to perform a registration through the second RAN node while retaining a stored inactive context related to the first RAN node, wherein a dual registration timer is used for retaining the stored inactive context, thereby having a dual registration to the first and second RAN nodes. The UE is further configured to enter a state in the second RAT while remaining in the inactive state in the first RAT.

According to still another aspect of embodiments herein, the object is achieved by providing a first RAN node for handling communication with a UE. The first RAN node is associated with a first RAT and a second RAN node is associated with a second RAT. The UE, the first RAN node and the second RAN node operate in a wireless communication network. The UE is located on or close to a radio coverage border of the first RAT and the second RAT and is in inactive state in the first RAT when being registered through the first RAN node. The first RAN node is configured to configure the UE with a dual registration timer for dual registration, that the UE will use to retain the inactive context in the first RAT when registering through the second RAN node. The first RAN is further configured to retain the inactive context until the timer is expired.

It is furthermore provided herein a non-claimed computer program product comprising instructions, which, when executed on at least one processor, cause the at least one processor to carry out the method above, as performed by the UE or the first RAN node, respectively. It is additionally provided herein a computer-readable storage medium, having stored thereon a computer program product comprising instructions which, when executed on at least one processor, cause the at least one processor to carry out the method according to the method above, as performed by the UE or the first RAN node, respectively.

Embodiments herein are based on the realisation that as the UE retains the stored inactive context related to the first RAN node when performing a registration to the second RAN node, dual registration to the first and second RAN nodes is enabled and the UE does not need to initiate a registration every time it enters the coverage of the other RAT. Thereby, the communication is handled in a more efficient manner and the power consumption of the UE is decreased. Even though some embodiments have been summarized above, the claimed subject matter is de-fined in the attached claims 1-15.

### BRIEF DESCRIPTION OF THE DRAWINGS

Examples of embodiments herein are described in more detail with reference to attached drawings in which:
- Fig. 1: is a schematic overview depicting a network architecture for an EPS and a 5GS.
- Fig. 2: is a state diagram illustrating a UE state machine and state transitions between NR/5GC, E-UTRA/EPC and E-UTRA/5GC.
- Fig. 3: is a schematic communication scenario illustrating embodiments of a communications network.
- Fig. 4: is a flowchart depicting embodiments of a method performed by a UE.
- Fig. 5: is a flowchart depicting embodiments of a method performed by a first RAN node.
- Fig. 6: is a schematic cell diagram illustrating an example of inter-RAT mobility for UEs in RRC_INACTIVE state.
- Fig. 7A: is a combined signal scheme and flowchart illustrating some embodiments herein.
- Fig. 7B: is a continuation of the signal scheme and flowchart of Fig. 7A illustrating some embodiments herein.
- Fig. 8: is a schematic block diagram illustrating a UE according to some embodiments herein.
- Fig. 9: is a schematic block diagram illustrating a first RAN node according to some embodiments herein.
- Fig. 10: illustrates a telecommunication network connected via an intermediate network to a host computer in accordance with some embodiments;
- Fig. 11: illustrates a host computer communicating via a base station with a user equipment over a partially wireless connection in accordance with some embodiments;
- Fig. 12: illustrates methods implemented in a communication system including a host computer, a base station and a user equipment in accordance with some embodiments;
- Fig. 13: illustrates methods implemented in a communication system including a host computer, a base station and a user equipment in accordance with some embodiments;
- Fig. 14: illustrates methods implemented in a communication system including a host computer, a base station and a user equipment in accordance with some embodiments; and
- Fig. 15: illustrates methods implemented in a communication system including a host computer, a base station and a user equipment in accordance with some embodiments.

### DETAILED DESCRIPTION

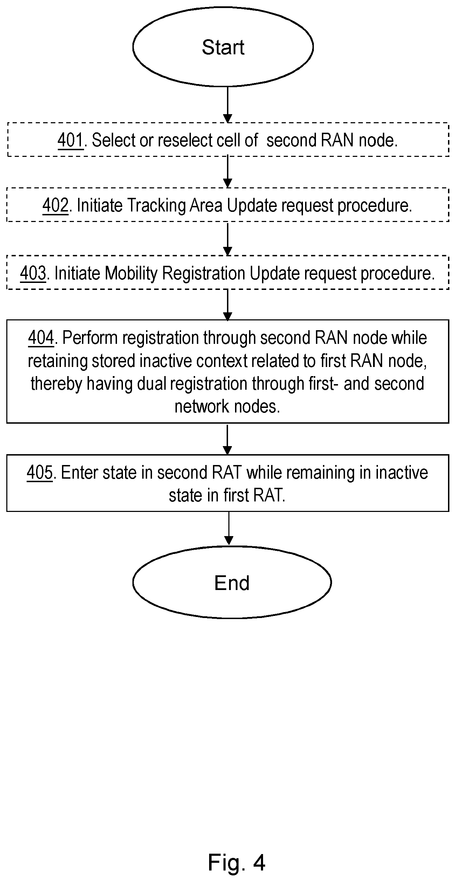

Hereinafter, figures 4-5 and 8-9 provide embodiments of the invention, whereas the other figures are presented for a better understanding of the invention.

In all the embodiments according to the invention, the UE is located on or close to a radio coverage border of the first RAT and the second RAT.

First the technology according to prior-art will be described

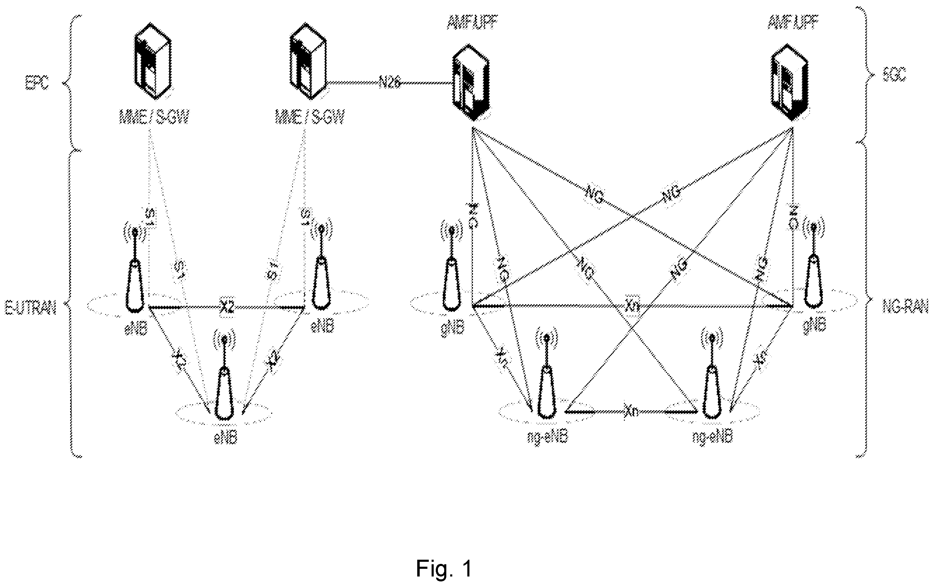

The following section relates to Inter-Radio Access Technology (RAT), Intra-5G Core (5GC) and Inter-core interworking in LTE and NR. Fig. 1 is a schematic overview depicting a network architecture for an EPS, e.g. E-UTRAN and EPC, and 5GS, e.g. NG-RAN and 5GC.

3GPP introduces both a new core network, e.g. 5GC, and a RAT, e.g. NR, in the 5G system (5GS). However, the core network will also support other RATs than NR, such as E-UTRA. As shown in Fig. 1, the network architecture for EPS comprises an E-UTRAN comprising LTE nodes, e.g. eNBs, which are connected to EPC. Fig. 1 also shows the network architecture for 5GS comprising an NG-RAN comprising LTE nodes, e.g. ng-eNBs, and NR nodes, e.g. gNBs, which are connected to 5GC.

The LTE nodes connected to EPC can be interconnected through the X2 interface, while the NG-RAN nodes can be interconnected through the Xn interface. 3GPP has also introduced an interface between the Mobility Management Entity (MME) in EPC and the Access and Mobility Management Function (AMF) in 5GC called N26, which enables interworking between EPC and 5GC. Fig. 1 shows the N26 interface between one MME and AMF, however, the N26 interface may exist between many MMEs and AMFs.

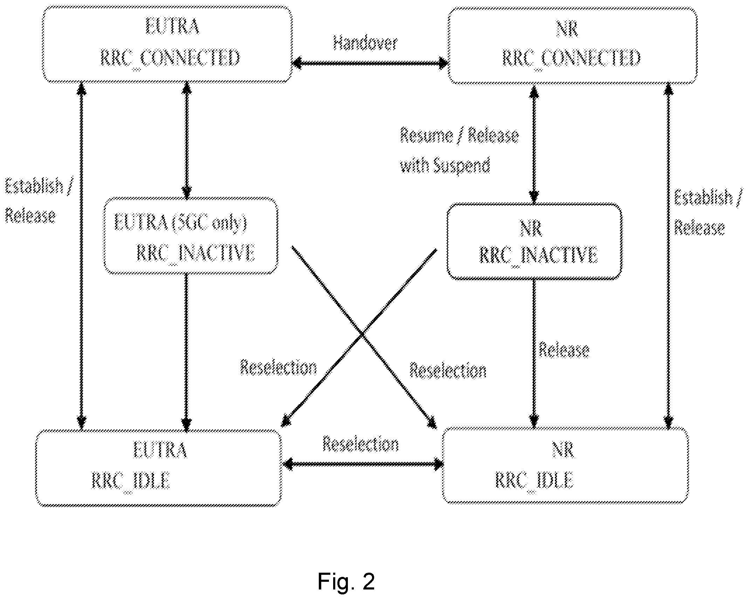

**Fig. 2** is a state diagram illustrating a UE state machine and state transitions between NR/5GC, E-UTRA/EPC and E-UTRA/5GC. A Radio Resource Control (RRC)_INACTIVE state and the associated state transitions are only available for NR/5GC and E-UTRA/5GC. The RRC state RRC_INACTIVE was introduced in 3GPP Release-15 for both NR and LTE/5GC. In RRC_INACTIVE state, the UE stores certain configurations, e.g. Data Radio Bearer (DRB) configurations and physical layers parameters. When the UE needs to resume the connection to the network, it transmits an RRCConnectionResumeRequest or RRCResumeRequest/RRCResumeRequest1. The UE may then reuse the stored settings and reduce the time and signaling needed to properly operate in RRC_CONNECTED, as when in RRC_INACTIVE state the security and CN connection are restored upon resume. Thus when in RRC_INACTIVE, the connection from RAN to CN for the UE is kept. At resume it is possible to reduce the time and signaling needed to operate in RRC_CONNECTED.

In NR, an RRC Connection Resume procedure may be initiated with an RRCResumeRequest, including a short I-Radio Network Temporary Identifier (I-RNTI) of 24 bits, or an RRCResumeRequest1, including a full I-RNTI of 40 bits. The I-RNTI is used to identify the UE context in RRC_INACTIVE. A UE may select an RRCResumeRequest1, sent on the logical Common Control Channel (CCCH1), if the cell where the UE is camped on broadcasts System information Block (SIB1) with presence of useFullResumelD IE (true). Otherwise, the UE may initiate an RRC Connection Resume procedure with RRCResumeRequest, sent on the CCCH.

A UE in RRC_INACTIVE state in one RAT and performing cell reselection to another RAT may trigger the UE to release its Access Stratum (AS) context, enter an RRC_IDLE state in the reselected RAT and perform a registration area update.

The following section concerns RRC Release and Radio access node Notification Areas (RNAs).

To suspend a UE from RRC_CONNECTED state to RRC_INACTIVE state, the last serving node prepares an RRC Release message which contains configurations for the RRC_INACTIVE state. In NR, this message is the RRC Release message with the suspendConfig which contains configurations for a RNA, which comprises one of the following choices:
1) A list of cells
2) A list of "RAN Area Config"
The list of "RAN Area Config" can either be:
2.1) a list of RAN Area Codes (RANCs) and associated Tracking Area Code (TAC)
2.2) a list of Tracking Area Code

The "RAN Area Config" is encoded in RRC NR as follows:

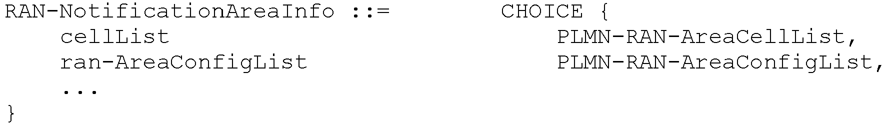

The first choice is between cellList or ran-AreaConfigList. In the case of cellList, it is possible to signal a common Public Land Mobile Network (PLMN) for a list of cells, or different PLMNs per cell.

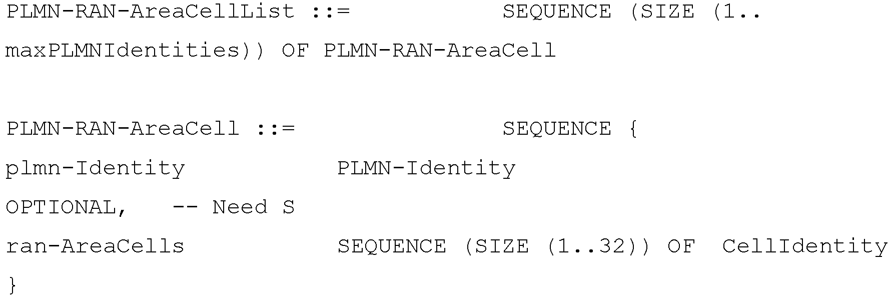

Each RAN area configuration in the list has a TAC. Hence, the NG-RAN may configure the UE with a list of Tracking Area Identifiers TAls, i.e. a TAC and a PLMN, or a list of RAN Area Identifiers where each RAN Area Identifier comprises a TAC and a RANAC. The TAI comprises a Mobile Country Code (MCC), a Mobile Network Code (MNC), and a TAC.

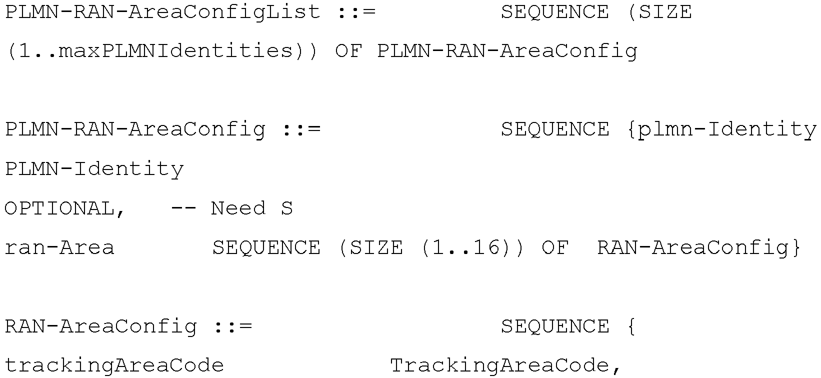

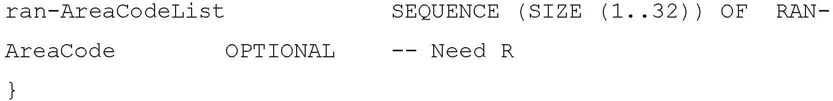

Whenever a UE in RRC_INACTIVE state reselects to a new cell, e.g. based on measurements on signals from the cells, the UE checks whether the target cell belongs to the configured RNA by checking the system information, e.g. SIB1, broadcasted from the target cell. If the SIB1 contains the cell identity or the RANAC included in the RNA list of cells or RANACs respectively, the UE will remain in RRC_INACTIVE state without performing any signaling. Since the NG-RAN is aware that the UE is configured with a set of cells and/or RANACs, the UE does not need to inform the network as long as it remains within the RNA. If the network needs to page the UE, e.g. due to an incoming downlink data or a voice call, the core network will address the source node, which suspended the UE, and the source node may perform a RAN paging across the cells inside the RNA. In the case the RNA is made up of cells belonging to different NG-RAN nodes, the source NG-RAN node will send an XnAP paging message to the other NG-RAN nodes serving the RNA so that these NG-RAN nodes can page the UE within their own cells. Since the NG-RAN node only pages in the RNA, it is advantageous for the NG-RAN to know when the UE moves outside the configured RNA configuration for reachability purposes.

However, if the UE reselects a new NR cell which does not belong to the RNA configuration at the UE, e.g. based on cell Id or TAC/RANAC, the UE may initiate an RRC Connection Resume procedure by sending an RRCResumeRequest/RRCResumeRequest1 either to perform a RAN Area Update, i.e. with ResumeCause value ranAreaUpdate, or to perform a Non-Access Stratum (NAS) procedure, e.g. Tracking/Registration Area Update, by transmitting a resume message with the ResumeCause in accordance with the NAS message, which may occur in case the UE leaves a cell and enters both a new RAN area and new registration area. In either case, the network may decide upon reception of the Resume Request message whether to keep the UE in RRC_CONNECTED state, or to release the UE to move back to RRC_INACTIVE state with updated configurations or to transition the UE to RRC_IDLE state. Other options are also possible, e.g. to reject the UE with wait time, in case of overload.

Regarding RRC Release messages in NR, as can be seen below, the RRCRelease message in NR comprises a suspendConfig Information Element (IE). The suspendConfig includes the configuration of an RAN Notification Area (RNA) which comprises either a list of cells, or a list of RAN Area Config, which in turns contains a Tracking Area Code and optionally a RANAC.
See RRCRelease in NR, TS. 38.331 v 15.4.0 below:

### RRCRelease message

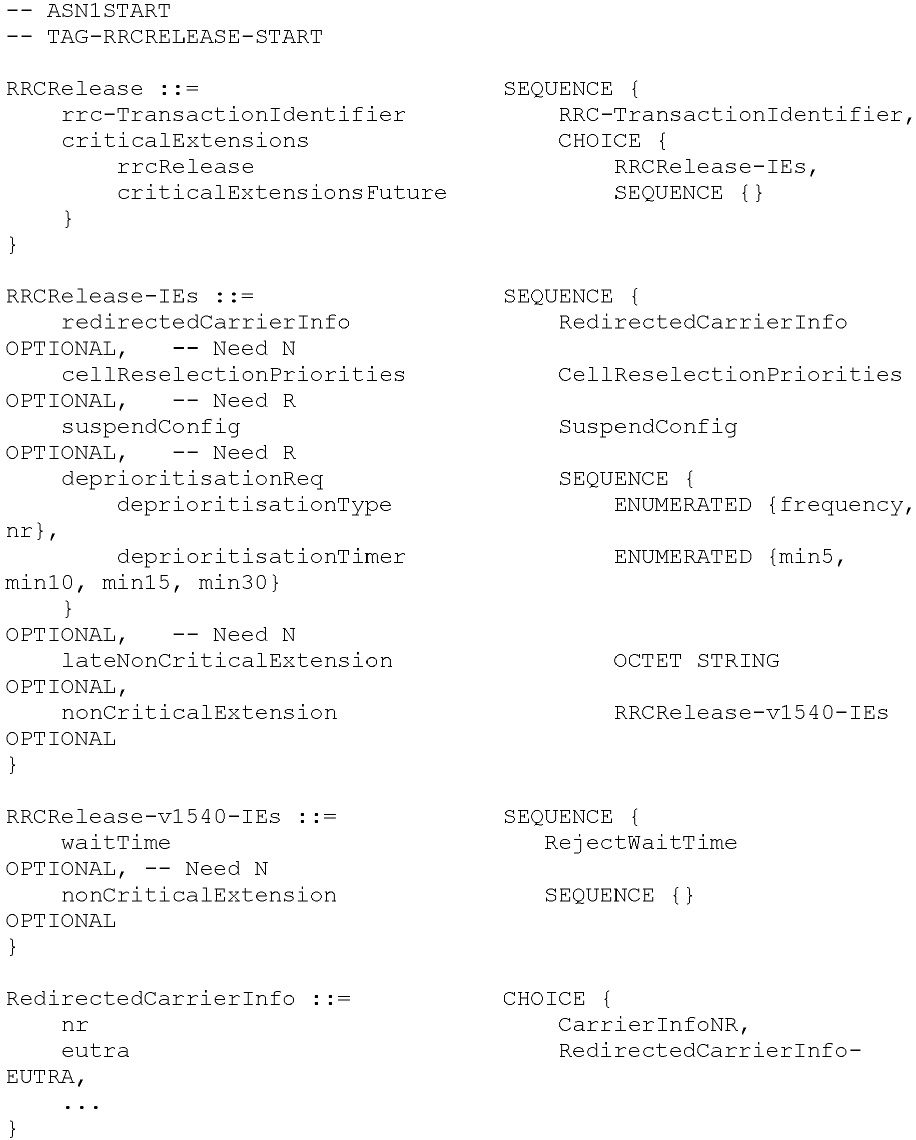

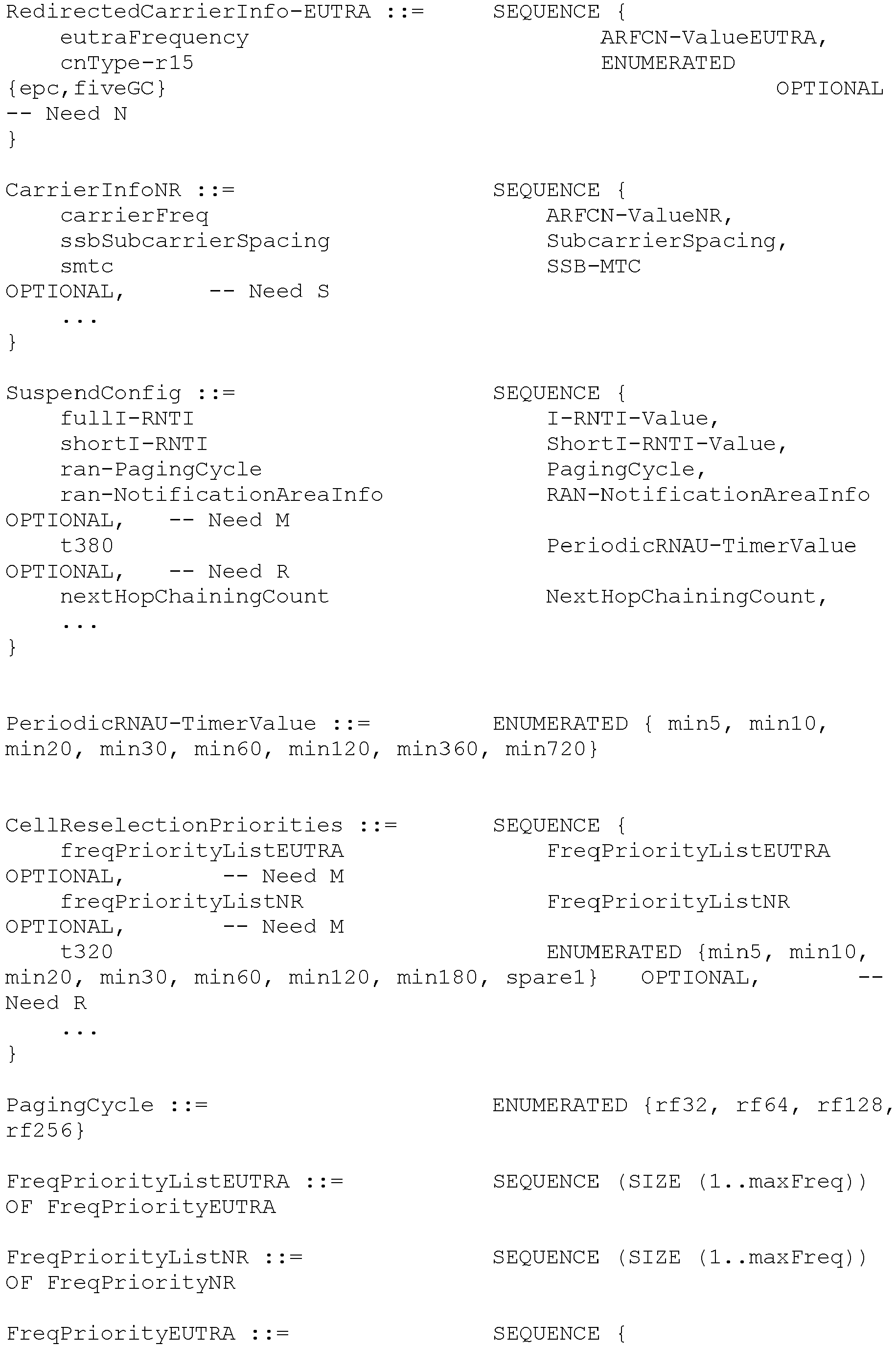

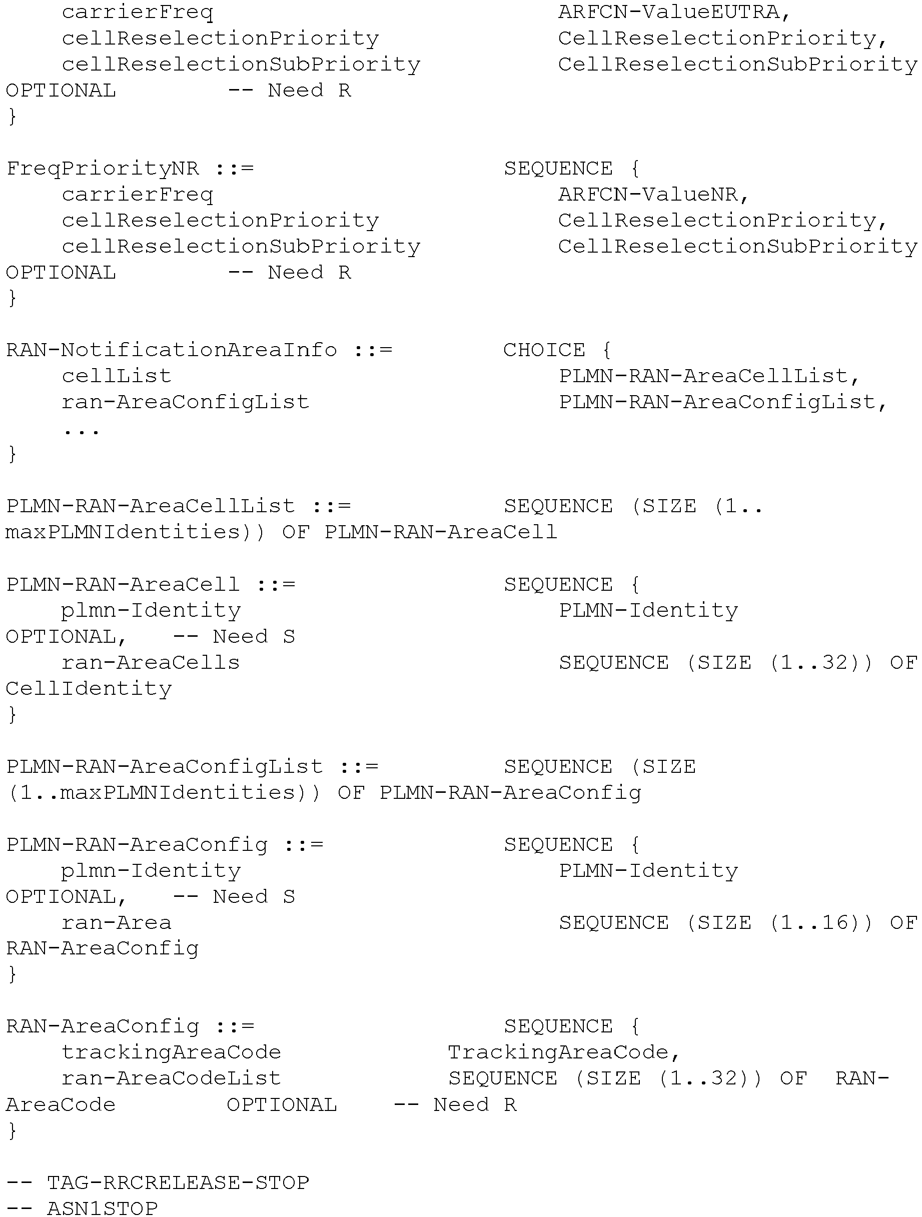

Regarding the current inter-working mechanism for RRC_IDLE state and RRC_INACTIVE state between 3GPP systems, it has been discussed in 3GPP Release 15 what kind of inter-RAT mobility would be supported when the UEs are in RRC_IDLE state and/or RRC_INACTIVE state.

Regarding Inter-RAT mobility in RRC_IDLE state, a UE in RRC_IDLE state in NR and connected to 5GC, upon reselecting to an LTE cell, may enter RRC_IDLE state in LTE.

If the target LTE cell is connected to 5GC with only a 5GC TAC associated, that TAC may either be part of the UE's TAI list or not. In other words, the UE may either trigger a Registration Area Update or not, depending whether the LTE cell is in its TAI list.

In the case the target LTE cell is connected to EPC only, and not included in the UE's TAI list, there may always be a Tracking Area Update since the cell is served by a different core network. EPC NAS only supports a 16 bits TAC, while 5GC has a 24 bits TAC. In other words, upon entering RRC_IDLE state in EPC, there may always be a Tracking Area Update. No paging between the core networks is supported between 5GC and EPC.

In the case the target cell is an LTE cell connected to both EPC and 5GC, as long as at least one of the TACs is in the UE's TAI list, there may be no Registration/Tracking Area Updates, i.e., no signalling.

Regarding Inter-RAT mobility in RRC_INACTIVE state, a UE in RRC_INACTIVE state in NR, upon reselecting to an LTE cell, may enter RRC_IDLE state in LTE.

If the target LTE cell is connected to 5GC, with only a 5GC TAC associated, that may either be part of the UE's TAI list or not. In other words, the LTE cell is in its TAI list.

In the case the UE is in RRC_INACTIVE state in NR and performs inter-RAT cell reselection to an LTE cell, the UE always transition to RRC_IDLE state in LTE, regardless if that is an LTE EPC only cell, or LTE 5GC only cell or both LTE 5GC/EPC cell.

According to current proceedings regarding Inter-RAT Cell reselection in RRC_INACTIVE state, upon cell reselection to an E-UTRA/EPC cell, the UE which is suspended to RRC_INACTIVE state discards the stored UE Access Stratum (AS) inactive context and any configuration for RRC_INACTIVE state in current TS 38.304. The UE performs tracking area update or registration update in EPC.

Location management in mobile communication systems is concerned with those network functions necessary to allow the UE to be reached whenever it is idle, e.g. in RRC_IDLE state, but located in the network coverage area. The challenge mainly comes when the idle UE is moving around. In case of multi-RAT nodes, for example, the same geographical node location may belong to two RATs, e.g. NR and E-UTRA. The current design of tracking areas in LTE and NR takes the idle and/or inactive UEs of these two RATs separately. However, there may be an inactive UE performing a Tracking Area Update just because it is located at the border between the two RATs and in most cases in the coverage of a dual RAT node, e.g. eNB/gNB. Therefore, the challenge may not only be due to the idle UEs movement, but it may happen to a stationary UE while facing a change in some physical radio property, also referred to as radio conditions.

A UE in the RRC_INACTIVE state, upon cell reselection to another RAT, may discard the stored AS inactive context and any configuration for RRC_INACTIVE state. This is unreasonably costly in cases when the conditions for cell reselection are valid for a short period of time.

Moreover, when the UE resides at the border between two RATs, e.g. between NR and E-UTRA/EPC or between NR and E-UTRA/5GC, the UE may perform the TAU/Attach/Registration Area Update/Registration request procedure every time it toggles between two RATs. This negatively impacts both the UE battery life time and the overall network signaling overhead.

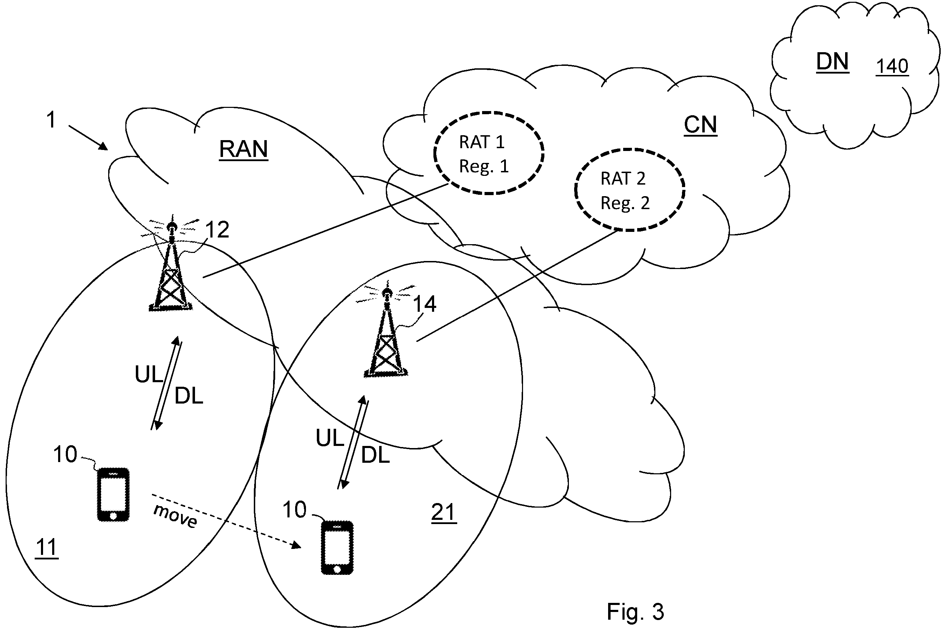

Embodiments herein relate to wireless communications networks in general. **Fig. 3** is a schematic overview depicting a wireless communications network, such as **a wireless communications network 1.** The wireless communications network 1 comprises one or more Radio Access Networks (RANs) and one or more Core Networks (CNs). The wireless communications network 1 may use one or a number of different technologies. Embodiments herein relate to recent technology trends that are of particular interest in a New Radio (NR) context, however, embodiments are also applicable in further development of existing wireless communications systems such as e.g. LTE or Wideband Code Division Multiple Access (WCDMA).

In the wireless communications network 1, **a UE 10** is comprised. The UE 10, may e.g. be a wireless device such as a mobile station, a non-access point (non-AP) station (STA), a STA and/or a wireless terminal, communicating via e.g. one or more Access Networks (ANs), e.g. RANs, to one or more CNs. It should be understood by the skilled in the art that "UE" is a non-limiting term which means any terminal, wireless communications terminal, user equipment, Narrowband Internet of Things (NB-IoT) device, Machine Type Communication (MTC) device, Device to Device (D2D) terminal, or node e.g. smart phone, laptop, mobile phone, sensor, relay, mobile tablets or even a small base station capable of communicating using radio communication with a radio network node within an area served by the radio network node.

The wireless communication network 1 comprises **a first RAN node 12** providing radio coverage over a geographical area, a service area, e.g. **a cell 11,** of a first RAT, such as NR, LTE or similar. The wireless communication network 1 further comprises a **second RAN node 14** providing radio coverage over a geographical area, a service area, e.g. **a cell 21,** of a second RAT, such as NR, LTE or similar. Each of the first RAN node 12 and the second RAN node 14 may provide a transmission point and a reception point, and may be implemented as an access node, an access controller, a base station, e.g. a radio base station such as a gNodeB (gNB), an evolved Node B (eNB, eNode B), a NodeB, a base transceiver station, a radio remote unit, an Access Point Base Station, a base station router, a Wireless Local Area Network (WLAN) access point or an Access Point Station (AP STA), a transmission arrangement of a radio base station, a stand-alone access point or any other network unit or node capable of communicating with a wireless device within the area served by the first or second RAN nodes, 12 and 14 respectively, depending e.g. on the RAT and terminology used. The first RAN node 12 and the second RAN node 14 may be referred to as a serving radio network node wherein the service area may be referred to as a serving cell, and the serving network node communicates with the wireless device in form of downlink (DL) transmissions to the wireless device and uplink (UL) transmissions from the wireless device. It should be noted that a service area may be denoted as cell, beam, beam group or similar to define an area of radio coverage.

The first RAN node 12 and/or the second RAN node 14 may be an AMF, which controls the base stations. The wireless communication network 1 comprises a core node, which may be an MME which is a control node for an LTE access network, a Serving Gateway (SGW), and a Packet Data Network Gateway (PGW). An MME is amongst other responsible for tracking and paging procedures including retransmissions. The MME and the AMF may communicate via the N26 interface, as shown in Fig. 1.

Methods according to embodiments herein may be respectively performed by the first RAN node 12, the second RAN node 14 and/or the UE 10. As an alternative, a Distributed Node (**DN**) and functionality, e.g. comprised in **a cloud 140** as shown in Fig. 3 may be used for performing or partly performing the methods and actions described herein.

According to embodiments herein the UE 10 is in an inactive state in the first RAT when being registered through the first RAN node 12. When the UE moves to the second RAT the UE 10 performs a registration through the second RAN node 14 while retaining a stored inactive context related to the first RAN node 12, thereby having a dual registration by being registered through both the first- and second RAN nodes 12 and 14, respectively, at the same time. The UE 10 further enters a state, e.g. an inactive state or an idle state, in the second RAT while remaining in the inactive state in the first RAT. The registration through the second RAN node 14 may be handled by the core node. Further, the registration through the first RAN node 12 and the registration through the second RAN node 14 may be created by the same core node or by two different core nodes depending on the implementation.

Some actions that may be performed by the UE 10 for handling the communication with a first RAN node 12 associated with a first RAT and a second RAN node 14 associated with a second RAT according to embodiments herein, will now be described with reference to a flowchart depicted in **Fig. 4** and with further reference to the communication scenario in Fig. 3. The UE 10, the first RAN node 12 and the second RAN node 14 are operating in the wireless communication network 1. The UE 10 is in inactive state in the first RAT when being registered through the first RAN node 12. The actions do not have to be taken in the order stated below, but may be taken in any suitable order. Optional actions that may be performed in some embodiments are marked with dashed boxes.

**Action 401.** When the UE 10 is in the radio coverage area, e.g. the cell 11, of the first RAN node 12 associated with the first RAT and moves to the radio coverage area, e.g. the cell 21, of the second RAN node 14 associated with the second RAT, the UE 10 may select, or reselect, the cell of the second RAN node 14. This is performed prior to performing the registration through the second RAN node 14.

**Action 402.** In some embodiments, when the first RAT is related to 5G and the second RAT is related to 4G, the UE 10 may initiate a Tracking Area Update (TAU) request procedure. The TAU is initiated when the UE 10 moves to a new tracking area which is not included in its list of tracking areas with which the UE 10 is registered.

**Action 403.** In some embodiments, when the first RAT is related to 4G and the second RAT is related to 5G, the UE 10 may initiate a Mobility Registration Update (MRU) request procedure. The MRU is initiated as the UE 10 leaves the area it is registered to and enters another area which it is not registered to.

**Action 404.** The UE 10 then performs a registration through the second RAN node 14 while retaining a stored inactive context related to the first RAN node 12, wherein a dual registration timer is used for retaining the stored inactive context. Thereby the UE 10 has a dual registration through the first RAN node 12 and the second RAN node 14. Storing the inactive context relating to the first RAN node 12 thus enables the dual registration through both the first RAN node 12 and the second RAN node 14. This enables the communication of the UE 10 in the wireless communication network to be handled in a more efficient manner, which in turn could reduce the power consumption of the UE 10.

Performing the registration through the second RAN node 14 may comprise maintaining a list of the second RAT in addition to maintaining a list of the first RAT. The registration may be handled, e.g. created and stored, in a core node. Further, the registration through the first RAN node 12 and the registration through the second RAN node 14 may be created by the same core node or by two different core nodes depending on the implementation.

In some embodiments, when the first RAT is related to 5G and the second RAT is related to 4G, the maintained list of the second RAT is a tracking area list and the maintained list of the first RAT is based on a Radio access node Notification Area (RNA).

In some embodiments, when the first RAT is related to 4G and the second RAT is related to 5G, the maintained list of the second RAT is based on the RNA and the maintained list of the first RAT is the tracking area list.

In some embodiments, the inactive context is an Access Stratum (AS) inactive context.

**Action 405.** The UE 10 then enters a state in the second RAT while remaining in the inactive state in the first RAT. The entered state in the second RAT may be the idle state or the inactive state.

Performing the registration through the second RAN node 14 and entering the state in the second RAT may be performed when the UE 10 is located on or close to a radio coverage border of, e.g. between, the first RAT and the second RAT.

According to some embodiments, when the UE 10 is registered to the reselected network, the UE 10 may be released to RRC_INACTIVE state after registration. This means that the UE 10 may concurrently be in RRC_INACTIVE state in two RATs with two stored separate contexts. The UE 10 may thus concurrently be in:
A. RRC_INACTIVE state in NR RAT and RRC_IDLE state in E-UTRA RAT.
B. RRC_INACTIVE state in E-UTRA RAT and RRC_IDLE state in NR RAT.
C. RRC_INACTIVE state in NR RAT and RRC_INACTIVE state in E-UTRA RAT.

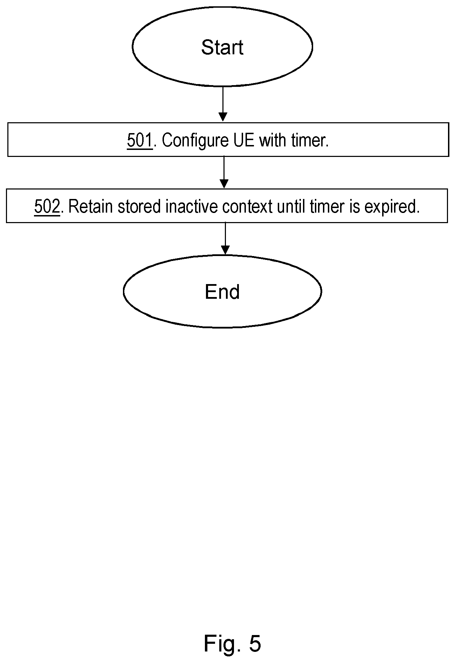

The method actions performed by the first RAN node 12 for handling communication with the UE 10 according to embodiments herein will now be described with reference to a flowchart depicted in **Fig. 5** and with further reference to the communication scenario in Fig. 3. The first RAN node 12 is associated with the first RAT and the second RAN node 14 is associated with the second RAT. The first RAN node 12, the second RAN node 14 and the UE 10 are operating in the wireless communication network 1. The UE 10 is in the inactive state in the first RAT when being registered through the first RAN node 12. The actions do not have to be taken in the order stated below, but may be taken in any suitable order.

**Action 501.** When transitioning the UE 10 to inactive state, the first RAN node 12 configures the UE 10 with a dual registration timer for dual registration that will be used by the UE 10 to retain the inactive context in the first RAT when registering through the second RAN node 14. The timer may be a dual registration timer.

**Action 502.** The first RAN node 12 then retains the inactive context until the timer is expired. The inactive context may be an AS inactive context. An additional condition for not retaining, e.g. not keeping, the inactive context may be that the UE 10 initiates the indication of, e.g. t380Dual expiration, or an uplink request to a cell which is far from the border between two RATs. Another additional condition for not retaining the inactive context may be that the UE 10 reselects to a cell which is not included in the TAI list in the E-UTRA RAT or new RNA in NR RAT. A further condition for not retaining the inactive context may be that the UE 10 responds to paging to a cell which is far from the border between two RATs.

Some of the embodiments herein, as mentioned above, will now be further described and exemplified. The text below is applicable to and may be combined with any suitable embodiment(s) described above.

Embodiments herein describe how the UE 10 is reachable in a network in one RAT when the UE 10 is in RRC_INACTIVE state, either E-UTRA or NR, and RRC_IDLE or RRC_INACTIVE state in another RAT. The embodiments herein are useful e.g. when the UE 10 toggles between different RATs, also known as ping pong effect. To address the aforementioned problem in a simple structure, it is assumed that the UE 10 being in the inactive state in the first RAT, e.g. is released to RRC_INACTIVE state in NR, and that the UE 10 may reside on the border between the NR and E-UTRA RATs.

According to embodiments herein, when the NR/5GC RRC_INACTIVE UE 10 reselects an E-UTRA/LTE cell, the UE 10 may initiate the TAU request procedure and it subscribes itself to E-UTRA/LTE network as dual registration. 3GPP TS23.501 section 5.17.2.3.3 describes mobility for UEs in dual-registration mode.

Embodiments herein may be considered according to the following UE and network perspectives:
1. Network perspective: Upon transitioning the UE 10 to inactive state, the NR network preserves the AS inactive context for a certain time. When the time expires the NG-RAN considers the UE as lost.
2. UE perspective: Upon reselection of an E-UTRA cell, the UE preserves its AS inactive context as separate context while the UE enters E-UTRA RRC_IDLE state. The UE keeps two concurrent states: NR RRC_INACTIVE state and E-UTRA RRC_IDLE state. The UE is not required to be able to receive paging in 5GC/NR when camping on E-UTRA/EPC.

Furthermore, the UE 10 may override the periodic RNA update timer, e.g. t380, to t380Dual, that may be a configurable timer sent to the UE 10 or a fixed defined timer. Upon expiration of the t380Dual timer the UE may send the indication of t380Dual expiration towards the camping RAT on which it is camped on to update its location.

Embodiments herein enhance the concept of lists, e.g. cell/TA code or RANAC lists, from one RAT to two RATs. When the UE 10 registers to a new RAT, it can keep a combination of two RATs list, either as one list or multiple ones.

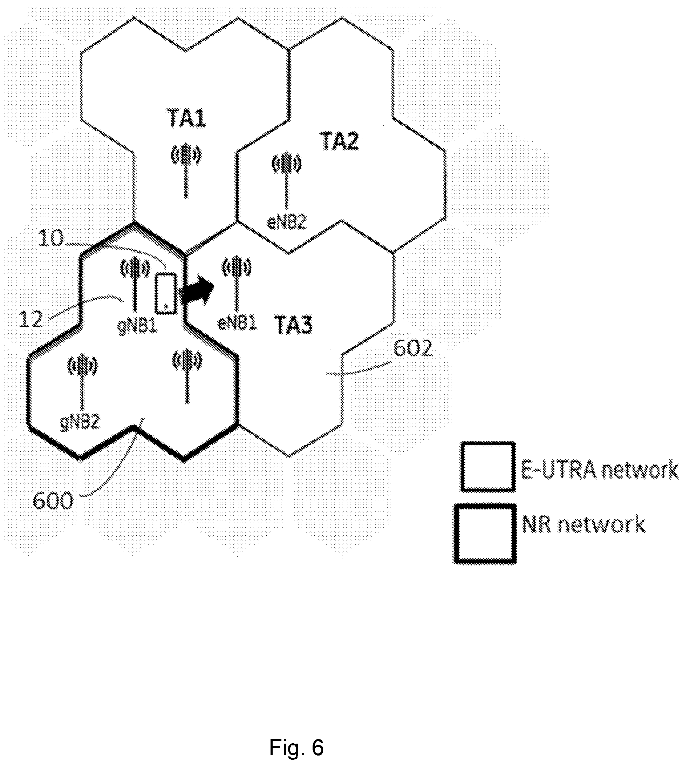

Fig. 6 illustrates an example of inter-RAT mobility between cells of different RATs for the UE 10. The UE 10 is in RRC_INACTIVE state in the first RAT when being registered through the first RAN node 12. The UE 10 is located on or close to a radio coverage border of the first RAT 600 and the second RAT 602, where the second RAT is shown as TA3. The first RAT may be either 5G or 4G, i.e. either NR or E-UTRA. The UE 10 may thus be in RRC_INACTIVE state in NR or E-UTRA. In this example, the first RAT 600 is related to 5G and the second RAT 602 is related to 4G. The UE 10 selects or reselect to Inter-RAT (I-RAT) cells connected to E-UTRA core network, i.e. the UE 10 moves from the first RAT related to 5G to the second RAT related to 4G.

In accordance with embodiments herein, the UE 10 keeps two concurrent states, e.g. inactive state such as RRC_INACTIVE and/or idle state such as RRC_IDLE. As will be explained further below, the UE 10 keeps its old state whenever it reselects the new RAT and can concurrently be in two different RRC states with separate contexts in 5G, e.g. NR-RAN, and 4G, e.g. E-UTRA RAN. The UE 10 is released to RRC_INACTIVE state in one RAT and then moves towards the I-RAT border. When the UE 10 enters the other RAT for the first time, the UE 10 registers in the new system by initiating a Tracking Area Update, if moving from 5G to 4G or initiating a Mobility Registration Update, if moving from 4G to 5G. As mentioned above, embodiments herein may be considered according to a network perspective and a UE perspective, which will be further explained below:
- Network perspective: Upon reception of a trigger from 4G, e.g. EPC, or from 5G, the resources in the NG-RAN, or E-UTRA, network may be suspended (if interface N26 is available). The NG-RAN, or E-UTRA, network preserves the inactive context, e.g. the AS inactive context, until the RAN Notification Area timer in the network is expired. In that case, the NG-RAN, or E-UTRA, considers the UE 10 as lost. The coordination between MME and AMF may be performed via the N26 interface.
- UE perspective: Upon reselection of an E-UTRA, or NR, cell, the UE 10 preserves its NR, or E-UTRA, inactive AS context as separate context according to a timer as further specified below, while the UE enters E-UTRA, or NR, RRC_IDLE state from the E-UTRA, or NR, network perspective. The UE 10 keeps two concurrent states:
   a. Upon reselection from NR to E-UTRAN: NR RRC_INACTIVE state and E-UTRA RRC_IDLE state
   b. Upon reselection from E-UTRAN to NR: E-UTRAN RRC_INACTIVE state and NR RRC_IDLE state.

Furthermore, the UE 10 may consider E-UTRA, or NR, tracking area list into its E-UTRA, or NR, context. Therefore, every time the UE 10 toggles between the two RATs, it skips the TAU procedure within the neighbour E-UTRA, or NR, tracking area.

In addition, the UE 10 may override the periodic RNA update timer, e.g. t380, to e.g. t380Dual. With expiration of the timer, which may optionally be either a fixed defined timer in the UE 10 or a configurable timer in SuspendConfig, the UE 10 may initiate an indication to the camped cell, either in the 4G or 5G network. The UE 10 may initiate RRCResumeRequest/ RRCResumeRequest1 with resumeCause set to rna-update or new cause value, when it moves back to NR coverage or an indication to the E-UTRA network.

The UE 10 is not required to be able to receive paging in 5GC/NR when camping on E-UTRA/EPC.

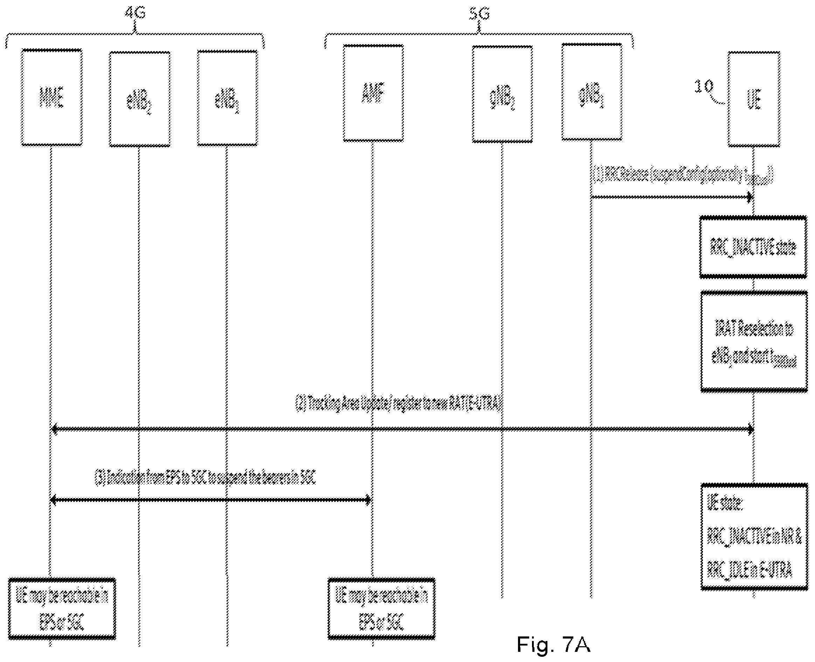

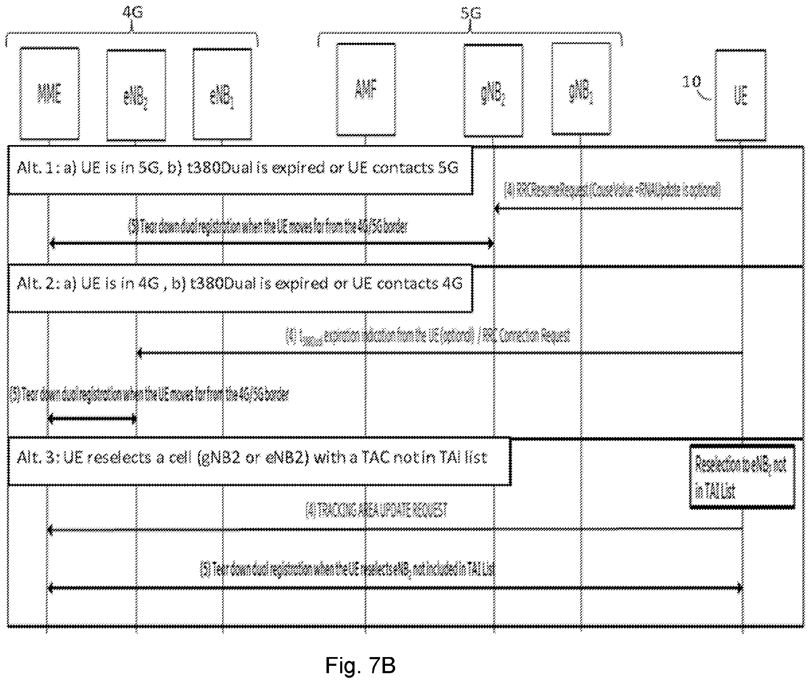

**Fig. 7A** and **7B** illustrate a combined flowchart and signalling scheme according to some embodiments herein for handling the communication in the communication network 1, where Fig. 7B is a continuation of Fig. 7A. Fig. 7A and 7B comprise the following actions:
**Action 1.** To suspend the UE 10 from RRC_CONNECTED state to RRC_INACTIVE state, the last serving node, e.g. the gNB₁ may prepare an RRCRelease message which contains configurations for the RRC_INACTIVE state. In 5G, this message is the RRCRelease message with the suspendConfig which comprises configurations for the RNA, which may comprise one of the following:
   1) a cell list
   2) a list RANACs and associated Tracking Area Code (TAC)
   3) a list of Tracking Area Code.
**Action 2.** The UE 10 initiates Tracking Area Update (TAU) request procedure and also registers itself to a new RAT, e.g. 4G, i.e. the E-UTRA/LTE network, as dual registration.
**Action 3.** An indication is optionally sent from EPS to 5GC to suspend the bearers in 5GC, if N26 interface is available.
**Action 4 and 5.** The UE 10 may override the periodic RNA update timer, e.g. t380 to t380Dual that may be a configurable timer sent to the UE 10 or a fixed defined timer. Upon expiration of the t380Dual timer, optionally the UE 10 may send the indication of t380Dual expiration towards the camping RAT on which it is camped on to update its location.

The dual registration may be torn down due to the following conditions:
1. Alt. 1 and Alt. 2: The UE 10 initiates the indication of t380Dual expiration or an UL request to a cell in a RAN node which is far from the border between the two RATs, outside the RNA.
2. Alt. 3: The UE reselects to a cell which is not included in the TAI List in the RAT relating to 4G or the new RNA in the RAT relating to 5G.

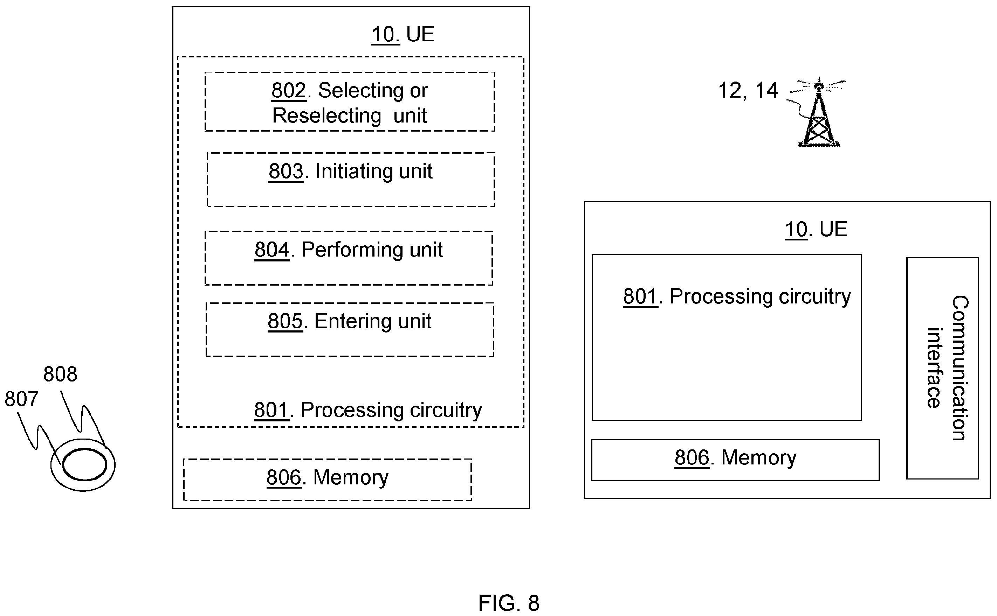

**Fig. 8** is a block diagram depicting the UE 10 for communication with the first RAN node 12 associated with the first RAT and the second RAN node 14 associated with the second RAT according to embodiments herein. The UE 10 is in the inactive state in the first RAT when being registered to the first RAN node 12.

The UE 10 may comprise **processing circuitry 801,** e.g. one or more processors, configured to perform the methods herein.

The UE 10 may comprise a **selecting or reselecting unit 802.** The UE 10, the processing circuitry 801, and/or the selecting or reselecting unit 802 may be configured to select or reselect the cell of the second RAN node 14.

The UE 10 may comprise an **initiating unit 803.** The UE 10, the processing circuitry 801, and/or the initiating unit 803 may be configured to initiate the TAU request procedure.

The UE 10, the processing circuitry 801, and/or the initiating unit 803 may be configured to initiate the MRU request procedure.

The UE 10 may comprise a **performing unit 804.** The UE 10, the processing circuitry 801, and/or the performing unit 804 is configured to perform the registration through the second RAN node 14 while retaining the stored inactive context related to the first RAN node 12, wherein a dual registration timer is used for retaining the stored inactive context, thereby having the dual registration through the first RAN node 12 and through the second RAN node 14.

The UE may be configured to perform the registration through the second RAN node 14 by maintaining the list of the second RAT in addition to maintaining the list of the first RAT.

The maintained list of the second RAT may be the tracking area list and the maintained list of the first RAT may be based on the Radio access node Notification Area, RNA.

The maintained list of the second RAT may be based on the RNA and the maintained list of the first RAT may be the tracking area list.

The inactive context may be the AS inactive context.

The UE 10 may comprise an **entering unit 805.** The UE 10, the processing circuitry 801, and/or the entering unit 805 is configured to enter the state in the second RAT while remaining in the inactive state in the first RAT.

Entering the state in the second RAT may comprise entering the idle state in the second RAT.

Entering the state in the second RAT may comprise entering the inactive state in the second RAT.

The UE 10 may be located on or close to the radio coverage border of the first RAT and the second RAT.

The UE 10 further comprises **a memory 806.** The memory 806 comprises one or more units to be used to store data on, such as radio signals, inactive context, tracking area lists, RNA lists, input/output data, metadata, etc. and applications to perform the methods disclosed herein when being executed, and similar. The UE 10 may further comprise a communication interface comprising e.g. one or more antenna or antenna elements.

The methods according to the embodiments described herein for the UE 10 are respectively implemented by means of e.g. **a computer program product 807** or a computer program, comprising instructions, i.e., software code portions, which, when executed on at least one processor, cause the at least one processor to carry out the actions described herein, as performed by the UE 10. The computer program product 807 may be stored on **a computer-readable storage medium 808,** e.g. a disc, a universal serial bus (USB) stick or similar. The computer-readable storage medium 808, having stored thereon the computer program product, may comprise the instructions which, when executed on at least one processor, cause the at least one processor to carry out the actions described herein, as performed by the UE 10. In some embodiments, the computer-readable storage medium may be a transitory or a non-transitory computer-readable storage medium.

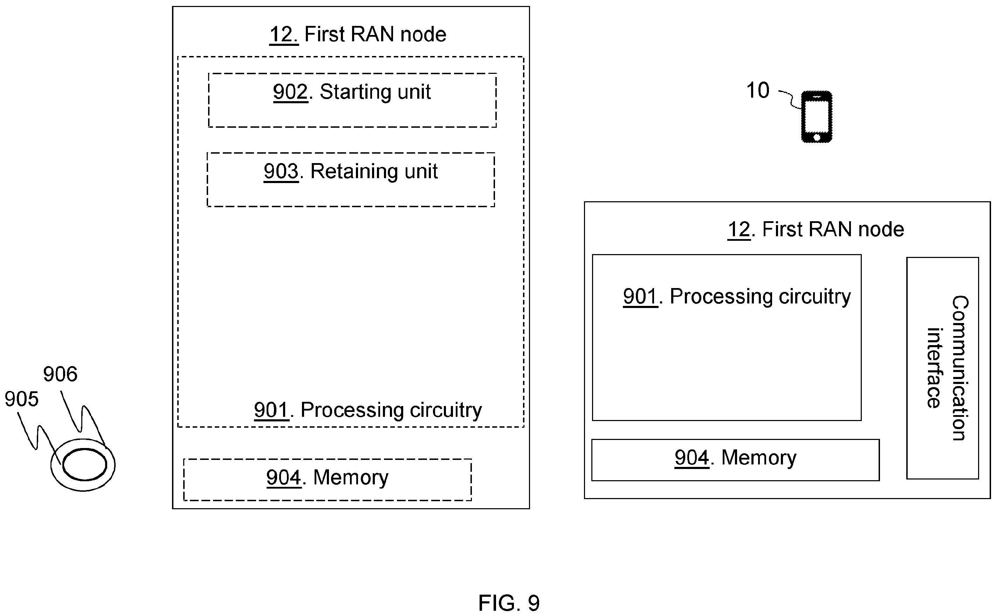

**Fig. 9** is a block diagram depicting the first RAN node 12 for handling communication with the UE 10, wherein the first RAN node 12 is associated with the first RAT and the second RAN node 14 is associated with the second RAT, according to embodiments herein.

The first RAN node 12 may comprise **processing circuitry 901,** e.g. one or more processors, configured to perform the methods herein.

The first RAN node 12 may comprise a **configuring unit 902.** The first RAN node 12, the processing circuitry 901, and/or the configuring unit 902 is configured to configure the UE 10 with a dual registration timer for dual registration, that the UE 10 will use to retain the inactive context in the first RAT when registering through the second RAN node 14. The timer may be the dual registration timer.

The first RAN node 12 may comprise a **retaining unit 903.** The first RAN node 12, the processing circuitry 901, and/or the retaining unit 903 is configured to retain the inactive context until the timer is expired. The inactive context may be the AS inactive context.

The first RAN node 12 further comprises **a memory 904.** The memory 904 comprises one or more units to be used to store data on, such as radio signals, inactive context, tracking area lists, RNA lists, input/output data, metadata, etc. and applications to perform the methods disclosed herein when being executed, and similar. The first RAN node 12 may further comprise a communication interface comprising e.g. one or more antenna or antenna elements.

The methods according to the embodiments described herein for first RAN node 12 are respectively implemented by means of e.g. **a computer program product 905** or a computer program, comprising instructions, i.e., software code portions, which, when executed on at least one processor, cause the at least one processor to carry out the actions described herein, as performed by the first RAN node 12. The computer program product 905 may be stored on **a computer-readable storage medium 906,** e.g. a disc, a universal serial bus (USB) stick or similar. The computer-readable storage medium 906, having stored thereon the computer program product, may comprise the instructions which, when executed on at least one processor, cause the at least one processor to carry out the actions described herein, as performed by the first RAN node 12. In some embodiments, the computer-readable storage medium may be a transitory or a non-transitory computer-readable storage medium.

In some embodiments a more general term "radio network node" is used and it can correspond to any type of radio-network node or any network node, which communicates with a wireless device and/or with another network node. Examples of network nodes are gNodeB, eNodeB, NodeB, MeNB, SeNB, a network node belonging to Master cell group (MCG) or Secondary cell group (SCG), base station (BS), multistandard radio (MSR) radio node such as MSR BS, eNodeB, network controller, radio-network controller (RNC), base station controller (BSC), relay, donor node controlling relay, base transceiver station (BTS), access point (AP), transmission points, transmission nodes, Remote radio Unit (RRU), Remote Radio Head (RRH), nodes in distributed antenna system (DAS), etc.

In some embodiments the non-limiting term wireless device or user equipment (UE) is used and it refers to any type of wireless device communicating with a network node and/or with another wireless device in a cellular or mobile communication system. Examples of UE are target device, device to device (D2D) UE, proximity capable UE (aka ProSe UE), machine type UE or UE capable of machine to machine (M2M) communication, Tablet, mobile terminals, smart phone, laptop embedded equipped (LEE), laptop mounted equipment (LME), USB dongles etc.

Embodiments are applicable to any radio access technology (RAT) or multi-RAT systems, where the devices receives and/or transmit signals, e.g. data, such as New Radio (NR), Wi-Fi, Long Term Evolution (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

As will be readily understood by those familiar with communications design, that functions means or circuits may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a UE or RAN node, for example.

Alternatively, several of the functional elements of the processing units discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware and/or program or application data. Other hardware, conventional and/or custom, may also be included. Designers of communications devices will appreciate the cost, performance, and maintenance trade-offs inherent in these design choices.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims and their legal equivalents.

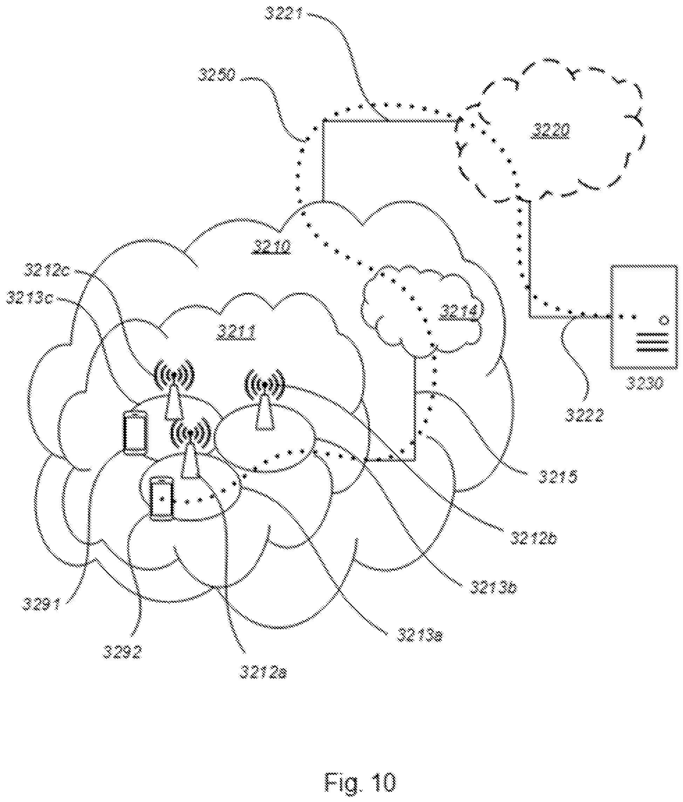

**Fig. 10** shows a Telecommunication network connected via an intermediate network to a host computer in accordance with some embodiments. With reference to Fig. 10, in accordance with an embodiment, a communication system includes telecommunication network 3210, such as a 3GPP-type cellular network, which comprises access network 3211, such as a radio access network, and core network 3214. Access network 3211 comprises a plurality of base stations 3212a, 3212b, 3212c, such as NBs, eNBs, gNBs or other types of wireless access points being examples of the RAN nodes12 and 14 above, each defining a corresponding coverage area 3213a, 3213b, 3213c. Each base station 3212a, 3212b, 3212c is connectable to core network 3214 over a wired or wireless connection 3215. A first UE 3291 located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example being examples of the wireless device 10 above, the disclosed embodiments are equally applicable to a situation where a sole UE is in the coverage area or where a sole UE is connecting to the corresponding base station 3212.

Telecommunication network 3210 is itself connected to host computer 3230, which may be embodied in the hardware and/or software of a standalone server, a cloud-implemented server, a distributed server or as processing resources in a server farm. Host computer 3230 may be under the ownership or control of a service provider, or may be operated by the service provider or on behalf of the service provider. Connections 3221 and 3222 between telecommunication network 3210 and host computer 3230 may extend directly from core network 3214 to host computer 3230 or may go via an optional intermediate network 3220. Intermediate network 3220 may be one of, or a combination of more than one of, a public, private or hosted network; intermediate network 3220, if any, may be a backbone network or the Internet; in particular, intermediate network 3220 may comprise two or more sub-networks (not shown).

The communication system of Figure 10 as a whole enables connectivity between the connected UEs 3291, 3292 and host computer 3230. The connectivity may be described as an over-the-top (OTT) connection 3250. Host computer 3230 and the connected UEs 3291, 3292 are configured to communicate data and/or signaling via OTT connection 3250, using access network 3211, core network 3214, any intermediate network 3220 and possible further infrastructure (not shown) as intermediaries. OTT connection 3250 may be transparent in the sense that the participating communication devices through which OTT connection 3250 passes are unaware of routing of uplink and downlink communications. For example, base station 3212 may not or need not be informed about the past routing of an incoming downlink communication with data originating from host computer 3230 to be forwarded (e.g., handed over) to a connected UE 3291. Similarly, base station 3212 need not be aware of the future routing of an outgoing uplink communication originating from the UE 3291 towards the host computer 3230.

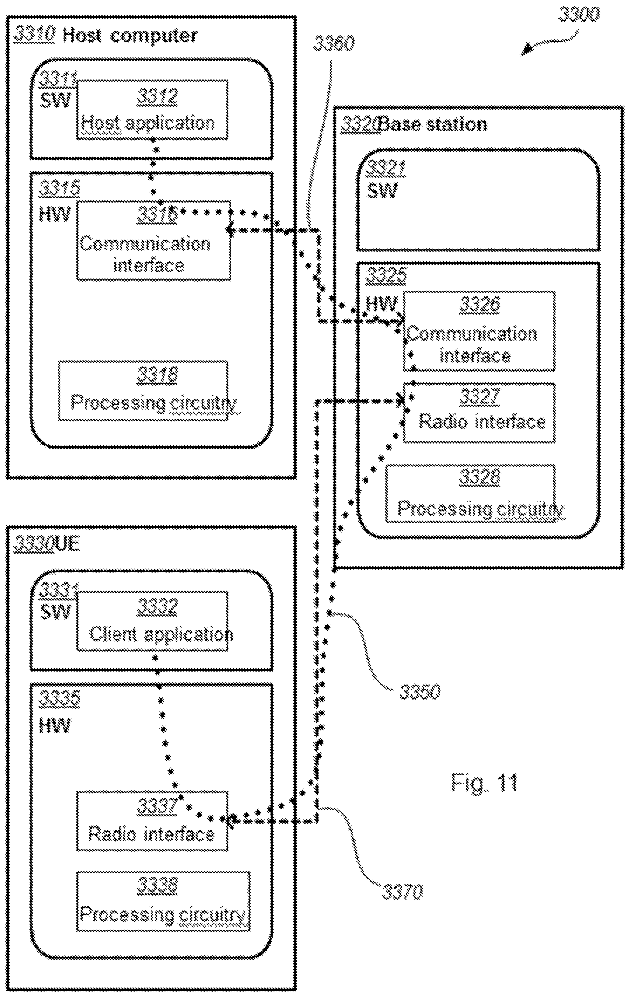

**Fig. 11** shows a host computer communicating via a base station and with a user equipment over a partially wireless connection in accordance with some embodiments

Example implementations, in accordance with an embodiment, of the UE, base station and host computer discussed in the preceding paragraphs will now be described with reference to Fig 11. In communication system 3300, host computer 3310 comprises hardware 3315 including communication interface 3316 configured to set up and maintain a wired or wireless connection with an interface of a different communication device of communication system 3300. Host computer 3310 further comprises processing circuitry 3318, which may have storage and/or processing capabilities. In particular, processing circuitry 3318 may comprise one or more programmable processors, application-specific integrated circuits, field programmable gate arrays or combinations of these (not shown) adapted to execute instructions. Host computer 3310 further comprises software 3311, which is stored in or accessible by host computer 3310 and executable by processing circuitry 3318. Software 3311 includes host application 3312. Host application 3312 may be operable to provide a service to a remote user, such as UE 3330 connecting via OTT connection 3350 terminating at UE 3330 and host computer 3310. In providing the service to the remote user, host application 3312 may provide user data which is transmitted using OTT connection 3350.

Communication system 3300 further includes base station 3320 provided in a telecommunication system and comprising hardware 3325 enabling it to communicate with host computer 3310 and with UE 3330. Hardware 3325 may include communication interface 3326 for setting up and maintaining a wired or wireless connection with an interface of a different communication device of communication system 3300, as well as radio interface 3327 for setting up and maintaining at least wireless connection 3370 with UE 3330 located in a coverage area (not shown in Fig. 11) served by base station 3320. Communication interface 3326 may be configured to facilitate connection 3360 to host computer 3310. Connection 3360 may be direct or it may pass through a core network (not shown in Fig 11) of the telecommunication system and/or through one or more intermediate networks outside the telecommunication system. In the embodiment shown, hardware 3325 of base station 3320 further includes processing circuitry 3328, which may comprise one or more programmable processors, application-specific integrated circuits, field programmable gate arrays or combinations of these (not shown) adapted to execute instructions. Base station 3320 further has software 3321 stored internally or accessible via an external connection.

Communication system 3300 further includes UE 3330 already referred to. Its hardware 3333 may include radio interface 3337 configured to set up and maintain wireless connection 3370 with a base station serving a coverage area in which UE 3330 is currently located. Hardware 3333 of UE 3330 further includes processing circuitry 3338, which may comprise one or more programmable processors, application-specific integrated circuits, field programmable gate arrays or combinations of these (not shown) adapted to execute instructions. UE 3330 further comprises software 3331, which is stored in or accessible by UE 3330 and executable by processing circuitry 3338. Software 3331 includes client application 3332. Client application 3332 may be operable to provide a service to a human or non-human user via UE 3330, with the support of host computer 3310. In host computer 3310, an executing host application 3312 may communicate with the executing client application 3332 via OTT connection 3350 terminating at UE 3330 and host computer 3310. In providing the service to the user, client application 3332 may receive request data from host application 3312 and provide user data in response to the request data. OTT connection 3350 may transfer both the request data and the user data. Client application 3332 may interact with the user to generate the user data that it provides.

It is noted that host computer 3310, base station 3320 and UE 3330 illustrated in Fig. 11 may be similar or identical to host computer 3230, one of base stations 3212a, 3212b, 3212c and one of UEs 3291, 3292 of Fig. 10, respectively. This is to say, the inner workings of these entities may be as shown in Fig. 11 and independently, the surrounding network topology may be that of Fig. 10.

In Fig. 11, OTT connection 3350 has been drawn abstractly to illustrate the communication between host computer 3310 and UE 3330 via base station 3320, without explicit reference to any intermediary devices and the precise routing of messages via these devices. Network infrastructure may determine the routing, which it may be configured to hide from UE 3330 or from the service provider operating host computer 3310, or both. While OTT connection 3350 is active, the network infrastructure may further take decisions by which it dynamically changes the routing (e.g., on the basis of load balancing consideration or reconfiguration of the network).

Wireless connection 3370 between UE 3330 and base station 3320 is in accordance with the teachings of the embodiments described throughout this disclosure. One or more of the various embodiments improve the performance of OTT services provided to UE 3330 using OTT connection 3350, in which wireless connection 3370 forms the last segment. More precisely, the teachings of these embodiments may increase the performance of the UE as the UE may not need to perform the TAU/Attach/Registration Area Update/Registration request procedure every time it toggles between two RATs. This improves the UE battery life time and the overall network signalling overhead.

A measurement procedure may be provided for the purpose of monitoring data rate, latency and other factors on which the one or more embodiments improve. There may further be an optional network functionality for reconfiguring OTT connection 3350 between host computer 3310 and UE 3330, in response to variations in the measurement results. The measurement procedure and/or the network functionality for reconfiguring OTT connection 3350 may be implemented in software 3311 and hardware 3315 of host computer 3310 or in software 3331 and hardware 3333 of UE 3330, or both. In embodiments, sensors (not shown) may be deployed in or in association with communication devices through which OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of OTT connection 3350 may include message format, retransmission settings, preferred routing etc.; the reconfiguring need not affect base station 3320, and it may be unknown or imperceptible to base station 3320. Such procedures and functionalities may be known and practiced in the art. In certain embodiments, measurements may involve proprietary UE signaling facilitating host computer 3310's measurements of throughput, propagation times, latency and the like. The measurements may be implemented in that software 3311 and 3331 causes messages to be transmitted, in particular empty or 'dummy' messages, using OTT connection 3350 while it monitors propagation times, errors etc.

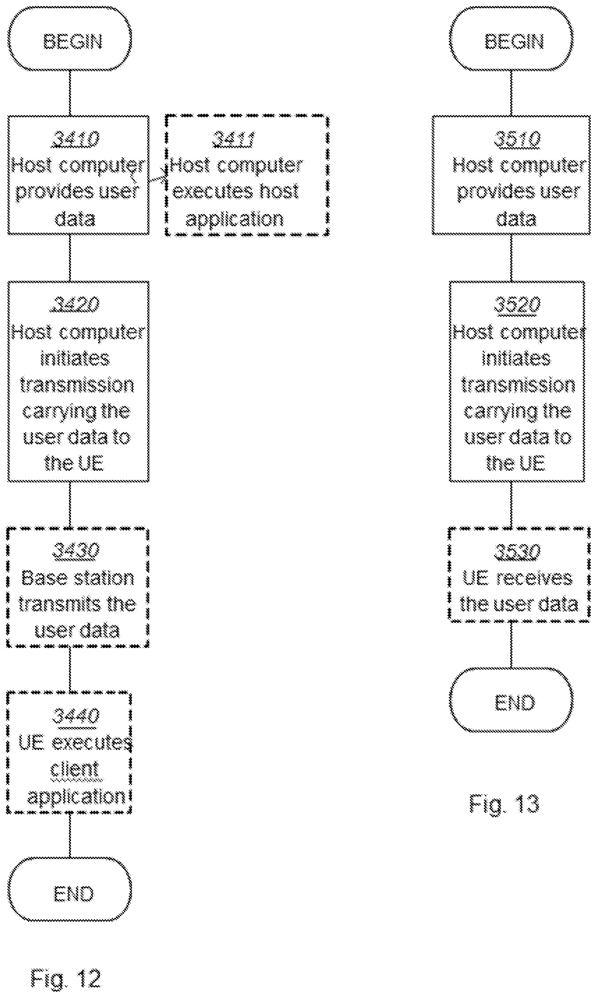

**Fig. 12** shows methods implemented in a communication system including a host computer, a base station and a user equipment in accordance with some embodiments.

Fig. 12 is a flowchart illustrating a method implemented in a communication system, in accordance with one embodiment. The communication system includes a host computer, a base station and a UE which may be those described with reference to Fig. 10 and Fig. 11. For simplicity of the present disclosure, only drawing references to Fig. 12 will be included in this section. In step 3410, the host computer provides user data. In substep 3411 (which may be optional) of step 3410, the host computer provides the user data by executing a host application. In step 3420, the host computer initiates a transmission carrying the user data to the UE. In step 3430 (which may be optional), the base station transmits to the UE the user data which was carried in the transmission that the host computer initiated, in accordance with the teachings of the embodiments described throughout this disclosure. In step 3440 (which may also be optional), the UE executes a client application associated with the host application executed by the host computer.

**Fig. 13** shows methods implemented in a communication system including a host computer, a base station and a user equipment in accordance with some embodiments.

Fig. 13 is a flowchart illustrating a method implemented in a communication system, in accordance with one embodiment. The communication system includes a host computer, a base station and a UE which may be those described with reference to Fig. 10 and Fig. 11. For simplicity of the present disclosure, only drawing references to Fig. 13 will be included in this section. In step 3510 of the method, the host computer provides user data. In an optional substep (not shown) the host computer provides the user data by executing a host application. In step 3520, the host computer initiates a transmission carrying the user data to the UE. The transmission may pass via the base station, in accordance with the teachings of the embodiments described throughout this disclosure. In step 3530 (which may be optional), the UE receives the user data carried in the transmission.

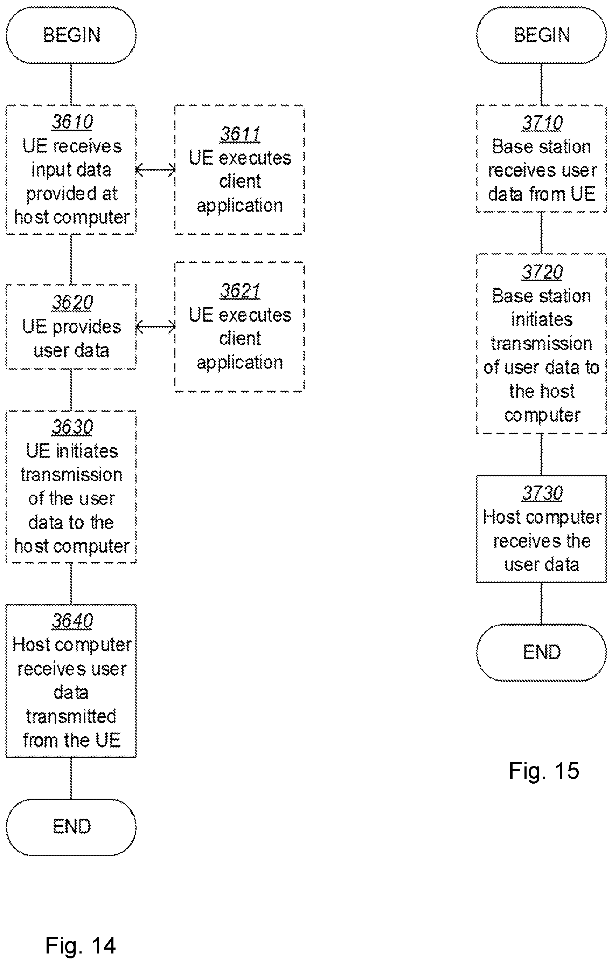

**Fig. 14** shows methods implemented in a communication system including a host computer, a base station and a user equipment in accordance with some embodiments.

Fig. 14 is a flowchart illustrating a method implemented in a communication system, in accordance with one embodiment. The communication system includes a host computer, a base station and a UE which may be those described with reference to Fig. 10 and Fig. 11. For simplicity of the present disclosure, only drawing references to Fig. 19 will be included in this section. In step 3610 (which may be optional), the UE receives input data provided by the host computer. Additionally or alternatively, in step 3620, the UE provides user data. In substep 3621 (which may be optional) of step 3620, the UE provides the user data by executing a client application. In substep 3611 (which may be optional) of step 3610, the UE executes a client application which provides the user data in reaction to the received input data provided by the host computer. In providing the user data, the executed client application may further consider user input received from the user. Regardless of the specific manner in which the user data was provided, the UE initiates, in substep 3630 (which may be optional), transmission of the user data to the host computer. In step 3640 of the method, the host computer receives the user data transmitted from the UE, in accordance with the teachings of the embodiments described throughout this disclosure.

**Fig. 15** show methods implemented in a communication system including a host computer, a base station and a user equipment in accordance with some embodiments.

Fig. 15 is a flowchart illustrating a method implemented in a communication system, in accordance with one embodiment. The communication system includes a host computer, a base station and a UE which may be those described with reference to Fig. 10 and Fig. 11. For simplicity of the present disclosure, only drawing references to Fig. 15 will be included in this section. In step 3710 (which may be optional), in accordance with the teachings of the embodiments described throughout this disclosure, the base station receives user data from the UE. In step 3720 (which may be optional), the base station initiates transmission of the received user data to the host computer. In step 3730 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims.

## Claims

1. A method performed by a User Equipment, UE, (10) for handling communication with a first Radio Access Network, RAN, node (12) associated with a first Radio Access Technology, RAT, and a second RAN node (14) associated with a second RAT, wherein the UE (10), the first RAN node (12) and the second RAN node (14) are operating in a wireless communication network, and wherein the UE (10) is in inactive state in the first RAT when being registered through the first RAN node (12), the method comprising:
- performing (404) a registration through the second RAN node (12) while retaining a stored inactive Access Stratum, AS, context related to the first RAN node (12), wherein a dual registration timer is used for retaining the stored inactive context, thereby having a dual registration to the first RAN node (12) and the second RAN node (14); and
- entering (405) a state in the second RAT while remaining in the inactive state in the first RAT, wherein the UE (10) is located on or close to a radio coverage border of the first RAT and the second RAT.

2. The method according to claim 1, wherein entering a state in the second RAT comprises entering an idle state in the second RAT.

3. The method according to claim 1, wherein entering a state in the second RAT comprises entering an inactive state, in the second RAT.

4. The method according to any one of claims 1-3, further comprising:
- selecting or reselecting (401) a cell of the second RAN node (14).

5. The method according to any one of claims 1-4, wherein the performing a registration through the second RAN node comprises maintaining a list of the second RAT in addition to maintaining a list of the first RAT.

6. The method according to any one of claims 1-5, wherein the first RAT is related to 5G and the second RAT is related to 4G, the method further comprising:
- initiating (402) a Tracking Area Update, TAU, request procedure.

7. The method according to claim 6, wherein the maintained list of the second RAT is a tracking area list and the maintained list of the first RAT is based on a Radio access node Notification Area, RNA.

8. The method according to any one of claims 1-5, wherein the first RAT is related to 4G and the second RAT is related to 5G, the method further comprising:
- initiating (403) a Mobility Registration Update, MRU, request procedure.

9. The method according to claim 8, wherein the maintained list of the second RAT is based on an RNA and the maintained list of the first RAT is a tracking area list.

10. The method according to any one of claims 1-9, wherein the inactive context is an AS inactive context.

11. A method performed by a first Radio Access Network, RAN, node (12) for handling communication with a User Equipment, UE, (10) wherein the first RAN node (12) is associated with a first Radio Access Technology, RAT and a second RAN node (14) is associated with a second RAT, and wherein the UE, the first RAN node (12) and the second RAN node (14) are operating in a wireless communication network, and wherein the UE (10) is in inactive state in the first RAT when being registered through the first RAN node (12), the method comprising:
- configuring (501) the UE (10) with a dual registration timer for dual registration, that the UE (10) will use to retain an inactive Access Stratum, AS, context in the first RAT when registering through the second RAN node (14); and
- retaining (502) the inactive context for the UE (10) until the timer is expired, wherein the UE (10) is located on or close to a radio coverage border of the first RAT and the second RAT.

12. The method according to claim 11, wherein the inactive context is an AS inactive context.

13. A User Equipment, UE, (10) for handling communication with a first Radio Access Network, RAN, node (12) associated with a first Radio Access Technology, RAT, and a second RAN node (14) associated with a second RAT, wherein the UE (10), the first RAN node (12) and the second RAN node (14) operate in a wireless communication network, and wherein the UE (10) is in inactive state in the first RAT when being registered through the first RAN node (12), the UE (10) is configured to:
perform a registration through the second RAN node (14) while retaining a stored Access Stratum, AS, inactive context related to the first RAN node (12), wherein a dual registration timer is used for retaining the stored inactive context, thereby having a dual registration to the first RAN node (12) and the second RAN node (14); and
enter a state in the second RAT while remaining in the inactive state in the first RAT, wherein the UE (10) is located on or close to a radio coverage border of the first RAT and the second RAT.

14. The UE (10) according to claim 13, wherein the UE (10) is configured to perform a registration through the second RAN node (14) by maintaining a list of the second RAT in addition to maintaining a list of the first RAT.

15. A first Radio Access Network, RAN, node (12) for handling communication with a User Equipment, UE, (10), wherein the first RAN node (12) is associated with a first Radio Access Technology, RAT and a second RAN node (14) is associated with a second RAT, and wherein the UE (10), the first RAN node (12) and the second RAN node (14) operate in a wireless communication network, and wherein the UE (10) is in inactive state in the first RAT when being registered through the first RAN node (12), wherein the first RAN node (12) is configured to:
configure the UE with a dual registration timer for dual registration, that the UE (10) will use to retain an Access Stratum, AS, inactive context in the first RAT when registering through the second RAN node (14); and
retain the inactive context until the timer is expired, wherein the UE (10) is located on or close to a radio coverage border of the first RAT and the second RAT.

## Patentansprüche

1. Verfahren, das von einer Benutzerausrüstung, UE, (10) durchgeführt wird, zum Abwickeln von Kommunikation mit einem ersten Funkzugangsnetzwerk-, RAN-Knoten, (12), der einer ersten Funkzugangstechnologie, RAT, zugeordnet ist, und einem zweiten RAN-Knoten (14), der einer zweiten RAT zugeordnet ist, wobei die UE (10), der erste RAN-Knoten (12) und der zweite RAN-Knoten (14) in einem drahtlosen Kommunikationsnetzwerk betrieben werden, und wobei sich die UE (10) in einem inaktiven Zustand in der ersten RAT befindet, wenn sie durch den ersten RAN-Knoten (12) registriert wird, wobei das Verfahren umfasst:
- Durchführen (404) einer Registrierung durch den zweiten RAN-Knoten (12) unter Beibehaltung eines gespeicherten inaktiven Access-Stratum-, AS-Kontexts, im Zusammenhang mit dem ersten RAN-Knoten (12), wobei ein Dual-Registrierungs-Timer zum Beibehalten des gespeicherten inaktiven Kontexts verwendet wird, wodurch eine duale Registrierung bei dem ersten RAN-Knoten (12) und dem zweiten RAN-Knoten (14) aufgewiesen wird; und
- Eintreten (405) in einen Zustand in der zweiten RAT unter Verweilen im inaktiven Zustand in der ersten RAT, wobei sich die UE (10) an oder nahe einer Funkabdeckungsgrenze der ersten RAT und der zweiten RAT befindet.

2. Verfahren nach Anspruch 1, wobei Eintreten in einen Zustand in der zweiten RAT Eintreten in einen Ruhezustand in der zweiten RAT umfasst.

3. Verfahren nach Anspruch 1, wobei Eintreten in einen Zustand in der zweiten RAT Eintreten in einen inaktiven Zustand in der zweiten RAT umfasst.

4. Verfahren nach einem der Ansprüche 1-3, weiter umfassend:
- Auswählen oder erneutes Auswählen (401) einer Zelle des zweiten RAN-Knotens (14).

5. Verfahren nach einem der Ansprüche 1-4, wobei das Durchführen einer Registrierung durch den zweiten RAN-Knoten Aufrechterhalten einer Liste der zweiten RAT zusätzlich zu dem Aufrechterhalten einer Liste der ersten RAT umfasst.

6. Verfahren nach einem der Ansprüche 1-5, wobei die erste RAT im Zusammenhang mit 5G steht und die zweite RAT im Zusammenhang mit 4G steht, wobei das Verfahren weiter umfasst:
- Initiieren (402) einer Tracking-Bereichs-Update-, TAU-Anforderungsprozedur.

7. Verfahren nach Anspruch 6, wobei die aufrechterhaltene Liste der zweiten RAT eine Tracking-Bereichsliste ist und die aufrechterhaltene Liste der ersten RAT auf einem Funkzugangsknoten-Benachrichtigungsbereich, RNA, basiert.

8. Verfahren nach einem der Ansprüche 1-5, wobei die erste RAT im Zusammenhang mit 4G steht und die zweite RAT im Zusammenhang mit 5G steht, wobei das Verfahren weiter umfasst:
- Initiieren (403) einer Mobilitätsregistrierungsaktualisierungs-, MRU-Anforderungsprozedur.

9. Verfahren nach Anspruch 8, wobei die aufrechterhaltene Liste der zweiten RAT auf einem RNA basiert und die aufrechterhaltene Liste der ersten RAT eine Tracking-Bereichsliste ist.

10. Verfahren nach einem der Ansprüche 1-9, wobei der inaktive Kontext ein inaktiver AS-Kontext ist.

11. Verfahren, das von einem ersten Funkzugangsnetzwerk-, RAN-Knoten (12) durchgeführt wird, zum Abwickeln von Kommunikation mit einer Benutzerausrüstung, UE, (10), wobei der erste RAN-Knoten (12) einer ersten Funkzugangstechnologie, RAT, zugeordnet ist, und ein zweiter RAN-Knoten (14) einer zweiten RAT zugeordnet ist, und wobei die UE, der erste RAN-Knoten (12) und der zweite RAN-Knoten (14) in einem drahtlosen Kommunikationsnetzwerk betrieben werden, und wobei sich die UE (10) in der ersten RAT in einem inaktiven Zustand befindet, wenn sie durch den ersten RAN-Knoten (12) registriert wird, wobei das Verfahren umfasst:
- Konfigurieren (501) der UE (10) mit einem Dual-Registration-Timer für die Dual-Registrierung, den das UE (10) verwendet, um bei dem Registrieren durch den zweiten RAN-Knoten (14) einen inaktiven Access-Stratum-Kontext, AS-Kontext, in der ersten RAT beizubehalten; und
- Beibehalten (502) des inaktiven Kontexts für die UE (10), bis der Timer abgelaufen ist, wobei sich das UE (10) an oder nahe einer Funkabdeckungsgrenze der ersten RAT und der zweiten RAT befindet.

12. Verfahren nach Anspruch 11, wobei der inaktive Kontext ein inaktiver AS-Kontext ist.

13. Benutzerausrüstung, UE, (10) zum Abwickeln von Kommunikation mit einem ersten Funkzugangsnetzwerk-, RAN-Knoten, (12), der einer ersten Funkzugangstechnologie, RAT, zugeordnet ist, und einem zweiten RAN-Knoten (14), der einer zweiten RAT zugeordnet ist, wobei die UE (10), der erste RAN-Knoten (12) und der zweite RAN-Knoten (14) in einem drahtlosen Kommunikationsnetzwerk betrieben werden, und wobei sich die UE (10) in der ersten RAT in einem inaktiven Zustand befindet, wenn sie durch den ersten RAN-Knoten (12) registriert wird, wobei die UE (10) konfiguriert ist, um:
eine Registrierung durch den zweiten RAN-Knoten (14) unter Beibehaltung eines gespeicherten inaktiven Access-Stratum-, AS-Kontexts, im Zusammenhang mit dem ersten RAN-Knoten (12) durchzuführen, wobei ein Dual-Registrierungs-Timer zum Beibehalten des gespeicherten inaktiven Kontexts verwendet wird, wodurch eine duale Registrierung bei dem ersten RAN-Knoten (12) und dem zweiten RAN-Knoten (14) aufgewiesen wird; und in einen Zustand in der zweiten RAT unter Beibehaltung des inaktiven Zustands in der ersten RAT einzutreten, wobei sich das UE (10) an oder nahe einer Funkabdeckungsgrenze der ersten RAT und der zweiten RAT befindet.

14. UE (10) nach Anspruch 13, wobei die UE (10) konfiguriert ist, um eine Registrierung durch den zweiten RAN-Knoten (14) durch Aufrechterhalten einer Liste der zweiten RAT zusätzlich zu dem Aufrechterhalten einer Liste der ersten RAT durchzuführen.

15. Erster Funkzugangsnetzwerk-, RAN-Knoten (12) zum Abwickeln von Kommunikation mit einer Benutzerausrüstung, UE, (10) wobei der erste RAN-Knoten einer ersten Funkzugangstechnologie, RAT, zugeordnet ist, und ein zweiter RAN-Knoten (14) einer zweiten RAT zugeordnet ist, und wobei die UE (10), der erste RAN-Knoten (12) und der zweite RAN-Knoten (14) in einem drahtlosen Kommunikationsnetzwerk betrieben werden, und wobei sich die UE (10) in der ersten RAT in einem inaktiven Zustand befindet, wenn sie durch den ersten RAN-Knoten (12) registriert wird, wobei der erste RAN-Knoten (12) konfiguriert ist, um:
die UE mit einem Dual-Registration-Timer für die Dual-Registrierung zu konfigurieren, den die UE (10) verwendet, um bei dem Registrieren durch den zweiten RAN-Knoten (14) einen inaktiven Access-Stratum-, AS-Kontext in der ersten RAT beizubehalten; und
den inaktiven Kontext beizubehalten, bis der Timer abgelaufen ist, wobei sich die UE (10) an oder nahe einer Funkabdeckungsgrenze der ersten RAT und der zweiten RAT befindet.

## Revendications

1. Procédé réalisé par un Équipement d'utilisateur, UE, (10) pour gérer une communication avec un premier nœud (12) de réseau d'accès radio, RAN, associé à une première technologie d'accès radio, RAT, et un second nœud (14) de RAN associé à une seconde RAT, dans lequel l'UE (10), le premier nœud (12) de RAN et le second nœud (14) de RAN fonctionnent dans un réseau de communication sans fil et dans lequel l'UE (10) est dans un état inactif dans la première RAT lorsqu'il est enregistré via le premier nœud (12) de RAN, le procédé comprenant :
- la réalisation (404) d'un enregistrement via le second nœud (12) de RAN tout en conservant un contexte de strate d'accès (AS) inactif stocké lié au premier nœud (12) de RAN, dans lequel un temporisateur de double enregistrement est utilisé pour conserver le contexte inactif stocké, ce qui permet de présenter un double enregistrement auprès du premier nœud (12) de RAN et du second nœud (14) de RAN ; et
- l'entrée (405) dans un état dans la seconde RAT tout en restant dans l'état inactif dans la première RAT, dans lequel l'UE (10) est situé sur ou à proximité d'une limite de couverture radio de la première RAT et de la seconde RAT.

2. Procédé selon la revendication 1, dans lequel l'entrée dans un état dans la seconde RAT comprend l'entrée dans un état de repos dans la seconde RAT.

3. Procédé selon la revendication 1, dans lequel l'entrée dans un état dans la seconde RAT comprend l'entrée dans un état inactif dans la seconde RAT.

4. Procédé selon l'une quelconque des revendications 1-3, comprenant en outre :
- la sélection ou la resélection (401) d'une cellule du second nœud (14) de RAN.

5. Procédé selon l'une quelconque des revendications 1 à 4, dans lequel la réalisation d'un enregistrement via le second nœud de RAN comprend le maintien d'une liste de la seconde RAT en plus du maintien d'une liste de la première RAT.

6. Procédé selon l'une quelconque des revendications 1-5, dans lequel la première RAT est liée à la 5G et la seconde RAT est liée à la 4G, le procédé comprenant en outre :
- le déclenchement (402) d'une procédure de demande de mise à jour de zone de suivi, TAU.

7. Procédé selon la revendication 6, dans lequel la liste maintenue de la seconde RAT est une liste de zones de suivi et la liste maintenue de la première RAT est basée sur une zone de notification de nœud d'accès radio, RNA.

8. Procédé selon l'une quelconque des revendications 1-5, dans lequel la première RAT est liée à la 4G et la seconde RAT est liée à la 5G, le procédé comprenant en outre :
- le déclenchement (403) d'une procédure de demande de mise à jour d'enregistrement de mobilité, MRU.

9. Procédé selon la revendication 8, dans lequel la liste maintenue de la seconde RAT est basée sur un RNA et la liste maintenue de la première RAT est une liste de zones de suivi.

10. Procédé selon l'une quelconque des revendications 1-9, dans lequel le contexte inactif est un contexte inactif AS.

11. Procédé réalisé par un premier nœud (12) de réseau d'accès radio, RAN, pour gérer une communication avec un Équipement d'utilisateur, UE, (10), dans lequel le premier nœud (12) de RAN est associé à une première technologie d'accès radio, RAT, et un second nœud (14) de RAN est associé à une seconde RAT et dans lequel l'UE, le premier nœud (12) de RAN et le second nœud (14) de RAN fonctionnent dans un réseau de communication sans fil et dans lequel l'UE (10) est dans un état inactif dans la première RAT lorsqu'il est enregistré via le premier nœud (12) de RAN, le procédé comprenant :
- la configuration (501) de l'UE (10) avec un temporisateur de double enregistrement pour un double enregistrement que l'UE (10) utilisera pour conserver un contexte de strate d'accès, AS, inactif dans la première RAT lors de l'enregistrement via le second nœud de RAN (14) ; et
- la conservation (502) du contexte inactif pour l'UE (10) jusqu'à ce que le temporisateur ait expiré, dans lequel l'UE (10) est situé sur ou à proximité d'une limite de couverture radio de la première RAT et de la seconde RAT.

12. Procédé selon la revendication 11, dans lequel le contexte inactif est un contexte inactif AS.

13. Équipement d'utilisateur, UE, (10) pour gérer une communication avec un premier nœud (12) de réseau d'accès radio, RAN, associé à une première technologie d'accès radio, RAT, et un second nœud (14) de RAN associé à une seconde RAT, dans lequel l'UE (10), le premier nœud de RAN (12) et le second nœud de RAN (14) fonctionnent dans un réseau de communication sans fil et dans lequel l'UE (10) est dans un état inactif dans la première RAT lorsqu'il est enregistré via le premier nœud de RAN (12), l'UE étant configuré pour :
réaliser un enregistrement via le second nœud de RAN (14) tout en conservant un contexte inactif de strate d'accès, AS, stocké lié au premier nœud de RAN (12), dans lequel un temporisateur de double enregistrement est utilisé pour conserver le contexte inactif stocké, ce qui permet de présenter un double enregistrement sur le premier nœud (12) de RAN et le second nœud (14) de RAN ; et entrer dans un état dans la seconde RAT tout en restant dans l'état inactif dans la première RAT, dans lequel l'UE (10) est situé sur ou à proximité d'une limite de couverture radio de la première RAT et de la seconde RAT.

14. UE (10) selon la revendication 13, dans lequel l'UE (10) est configuré pour réaliser un enregistrement via le second nœud (14) de RAN en maintenant une liste de la seconde RAT en plus du maintien d'une liste de la première RAT.

15. Premier nœud (12) de réseau d'accès radio, RAN, pour gérer une communication avec un Équipement d'utilisateur, UE, (10), dans lequel le premier nœud (12) de RAN est associé à une première technologie d'accès radio, RAT, et un second nœud (14) de RAN est associé à une seconde RAT et dans lequel l'UE (10), le premier nœud (12) de RAN et le second nœud (14) de RAN fonctionnent dans un réseau de communication sans fil et dans lequel l'UE (10) est dans un état inactif dans la première RAT lorsqu'il est enregistré via le premier nœud de RAN (12), dans lequel le premier nœud (12) de RAN est configuré pour :
configurer l'UE (10) avec un temporisateur de double enregistrement pour un double enregistrement que l'UE (10) utilisera pour conserver un contexte de strate d'accès, AS, inactif dans la première RAT lors de l'enregistrement via le second nœud (14) de RAN ; et
conserver le contexte inactif jusqu'à ce que le temporisateur ait expiré, dans lequel l'UE (10) est situé sur ou à proximité d'une limite de couverture radio de la première RAT et de la seconde RAT.
